# EUROPEAN PATENT APPLICATION

(11) **EP 3 578 586 A1**
(43) Date of publication of application: **11.12.2019**
(21) Application number: 18747851.6
(22) Date of filing: 02.02.2018
(51) Int. Cl.: C08G 65/336, C09D 5/16, C09D 183/12, C09K 3/18

(54) **PERFLUORO(POLY)ETHER GROUP-CONTAINING COMPOUND, AND SURFACE TREATMENT AGENT AND ARTICLE INCLUDING SAME**

(30) Priority: 03.02.2017 JP 2017018679; 25.04.2017 JP 2017085989; 30.10.2017 JP 2017209590
(71) Applicant: Daikin Industries, Ltd., Osaka-shi, Osaka 530-8323 (JP)
(72) Inventor: MITSUHASHI, Hisashi, Osaka-shi Osaka 530-8323 (JP); NOMURA, Takashi, Osaka-shi Osaka 530-8323 (JP); TAKANO, Shinya, Osaka-shi Osaka 530-8323 (JP); NAITOU, Masato, Osaka-shi Osaka 530-8323 (JP); NOSE, Masatoshi, Osaka-shi Osaka 530-8323 (JP); WATANABE, Yuusuke, Osaka-shi Osaka 530-8323 (JP)
(74) Representative: Hoffmann Eitle
(86) International application number: PCT/JP2018/003664
(87) International publication number: WO 2018/143433

(57) **Abstract**

The present invention provides a perfluoro(poly)ether group-containing silane compound represented by formula (1a) or formula (1b) (wherein the symbols are as defined in the description).

(Rf-PFPE)_{β}-X-(CR^{a}ₖR^{b}ₗR^{c}ₘ)_{α} ... (1a)

(R^{c}ₘR^{b}ₗR^{a}ₖC)_{α}-X-PFPE-X-(CR^{a}ₖR^{b}ₗR^{c}ₘ)_{α} ... (1b)

## Description

### Technical Field

The present invention relates to a perfluoro(poly)ether group-containing compound, and a surface-treating agent and an article including the compound.

### Background Art

A certain fluorine-containing compound is known to be able to provide excellent water-repellency, oil-repellency, antifouling property, and the like, when used for a surface treatment of a base material. A layer obtained from a surface-treating agent including a fluorine-containing compound (hereinafter, also referred to as a "surface-treating layer") is applied as a so-called functional thin film onto various base materials such as glass, plastic, a fiber, and a building material.

Such a fluorine-containing compound known is a perfluoropolyether group-containing silane compound having a perfluoropolyether group in a molecular backbone, and having a hydrolyzable group bound to a Si atom, at a molecular terminal or a terminal portion. (see Patent Documents 1 to 2).

### Prior Art Document

### Patent Document

Patent Document 1: JP 2008-534696 A
Patent Document 2: International Publication No. WO 97/07155

### Summary of Invention

### Technical Problem

The above surface-treating layer is required to have friction durability. It, however, has been found that the surface-treating layer described in Patent Documents 1 to 2 may not show sufficient friction durability, for example, in an environment easily exposed to acid and alkaline environments (for example, an environment where human sweat may be attached easily).

An object of the present invention is to provide a new perfluoro(poly)ether group-containing silane compound improved in friction durability.

### Solution to Problem

The present inventors have found that a surface-treating layer may be improved in friction durability by use of a new perfluoro(poly)ether group-containing silane compound, thereby leading to completion of the present invention.

That is, a first aspect of the present invention provides a perfluoro(poly)ether group-containing silane compound represented by formula (1a) or formula (1b):

(Rf-PFPE)_{β}-X-(CR^{a}ₖR^{b}ₗR^{c}ₘ)_{α} ··· (1a)

(R^{c}ₘR^{b}ₗR^{a}ₖC)_{α}-X-PFPE-X-(CR^{a}ₖR^{b}ₗR^{c}ₘ)_{α} ··· (1b)

wherein:
Rf represents, each independently at each occurrence, an alkyl group having 1 to 16 carbon atoms, optionally substituted with one or more fluorine atoms;
PFPE represents, each independently at each occurrence, a group represented by formula:

   -(OC₆F₁₂)ₐ-(OC₅F₁₀)_{b}-(OC₄F₈)_{c}-(OC₃F₆)_{d}-(OC₂F₄)ₑ-(OCF₂)_{f}-

   wherein a, b, c, d, e and f are each independently an integer of 0 or more and 200 or less, the sum of a, b, c, d, e and f is at least 1, and the occurrence order of respective repeating units in parentheses with a symbol a, b, c, d, e or f is not limited in the formula;
X represents, each independently at each occurrence, a single bond or a di- to decavalent organic group;
α is, each independently at each occurrence, an integer of 1 to 9;
β is each independently an integer of 1 to 9;
R^{a} represents, each independently at each occurrence, -Z-CR¹ₚR²_{q}R³ᵣ;
Z represents -R^{e}-Z'-;
R^{e} represents a lower alkylene group;
Z' represents a single bond, an oxygen atom or a divalent organic group;
R¹ represents, each independently at each occurrence, R^{a'};
R^{a'} has the same meaning as R^{a};
the number of C atoms linearly linked via a -Z-group in R^{a} is at most 5;
R² represents, each independently at each occurrence, -R^{d}-Y-SiR⁵ₙR⁶₃₋ₙ;
R^{d} represents, each independently at each occurrence, a lower alkylene group;
Y represents, each independently at each occurrence, a single bond, an oxygen atom or a divalent organic group;
R⁵ represents, each independently at each occurrence, a hydroxyl group or a hydrolyzable group;
R⁶ represents, each independently at each occurrence, a hydrogen atom or a lower alkyl group;
n independently represents an integer of 1 to 3 with respect to every (-R^{d}-Y-SiR⁵ₙR⁶₃₋ₙ) unit;
R³ represents, each independently at each occurrence, a hydrogen atom or a lower alkyl group;
p is, each independently at each occurrence, an integer of 0 to 3;
q is, each independently at each occurrence, an integer of 0 to 3;
r is, each independently at each occurrence, an integer of 0 to 3;
the sum of p, q and r with respect to every (-Z-CR¹ₚR²_{q}R³ᵣ) unit is 3;
R^{b} represents, each independently at each occurrence, -R^{d}-Y-SiR⁵ₙR⁶₃₋ₙ;
R^{c} represents, each independently at each occurrence, a hydrogen atom or a lower alkyl group;
k is, each independently at each occurrence, an integer of 0 to 3;
l is, each independently at each occurrence, an integer of 0 to 3;
m is, each independently at each occurrence, an integer of 0 to 3; and
the sum of k, l and m with respect to every (CR^{a}ₖR^{b}ₗR^{c}ₘ) is 3;
provided that at least one q is 3 or at least one l is 3 in the formulae.

A second aspect of the present invention provides a surface-treating agent containing at least one perfluoro(poly)ether group-containing silane compound represented by the formula (1a) and/or formula (1b).

A third aspect of the present invention provides a pellet containing the above surface-treating agent.

A fourth aspect of the present invention provides an article including a base material, and a layer formed from the perfluoropolyether group-containing silane compound or the surface-treating agent, on the surface of the base material.

### Advantageous Effects of Invention

The present invention provides a new perfluoro(poly)ether group-containing silane compound improved in friction durability.

### Description of Embodiments

As used herein, the "hydrocarbon group" means a group that contains carbon and hydrogen, where one hydrogen atom is removed from hydrocarbon. Such a hydrocarbon group is not limited, and examples thereof include a hydrocarbon group having 1 to 20 carbon atoms, optionally substituted with one or more substituents, for example, an aliphatic hydrocarbon group and an aromatic hydrocarbon group. For example, the "aliphatic hydrocarbon group" may be linear, branched or cyclic, and may be saturated or unsaturated. For example, the hydrocarbon group may have one or more ring structures. For example, such a hydrocarbon group may have one or more N, O, S, Si, amide, sulfonyl, siloxane, carbonyl, carbonyloxy, and other groups at a terminal or in a molecular chain.

As used herein, each substituent of the "hydrocarbon group" is not limited, and examples thereof include a halogen atom; and one or more groups selected from C₁₋₆ alkyl groups, C₂₋₆ alkenyl groups, C₂₋₆ alkynyl groups, C₃₋₁₀ cycloalkyl groups, C₃₋₁₀ unsaturated cycloalkyl groups, 5- to 10-membered heterocyclyl groups, 5- to 10-membered unsaturated heterocyclyl groups, C₆₋₁₀ aryl groups and 5- to 10-membered heteroaryl groups, which are optionally substituted with one or more halogen atoms.

As used herein, the "organic group" means a carbon-containing group. The organic group is not limited, and may be a hydrocarbon group. The "di- to decavalent organic group" means a carbon-containing, di- to decavalent group. Such a di- to decavalent organic group is not limited, and examples thereof include a di- to decavalent group where one to nine hydrogen atoms are further removed from a hydrocarbon group. The divalent organic group is not limited, and examples thereof include a divalent group where one hydrogen atom is further removed from a hydrocarbon group.

### (Perfluoropolyether group-containing silane compound)

Hereinafter, the perfluoropolyether group-containing compound of the present invention will be described.

The present invention provides a perfluoro(poly)ether group(hereinafter, also referred to as "PFPE")-containing silane compound represented by formula (1a) or formula (1b) (hereinafter, also referred to as "the PFPE-containing silane compound of the present invention").

(Rf-PFPE)_{β}-X-(CR^{a}ₖR^{b}ₗR^{c}ₘ)_{α} ··· (1a)

(R^{c}ₘR^{b}ₗR^{a}ₖC)_{α}-X-PFPE-X-(CR^{a}ₖR^{b}ₗR^{c}ₘ)_{α} ··· (1b)

In the formulae, Rf represents, each independently at each occurrence, an alkyl group having 1 to 16 carbon atoms, optionally substituted with one or more fluorine atoms.

For example, the "alkyl group having 1 to 16 carbon atoms" in the alkyl group having 1 to 16 carbon atoms, optionally substituted with one or more fluorine atoms, may be linear or branched, and is preferably a linear or branched alkyl group having 1 to 6 carbon atoms, in particular, 1 to 3 carbon atoms, more preferably a linear alkyl group having 1 to 3 carbon atoms.

Rf is preferably an alkyl group having 1 to 16 carbon atoms, substituted with one or more fluorine atoms, more preferably a CF₂H-C₁₋₁₅ fluoroalkylene group, further preferably a perfluoroalkyl group having 1 to 16 carbon atoms.

For example, the perfluoroalkyl group having 1 to 16 carbon atoms may be linear or branched, and is preferably a linear or branched perfluoroalkyl group having 1 to 6 carbon atoms, in particular, 1 to 3 carbon atoms, more preferably a linear perfluoroalkyl group having 1 to 3 carbon atoms, specifically -CF₃, -CF₂CF₃, or -CF₂CF₂CF₃.

In the formulae, PFPE is, each independently at each occurrence, a group represented by: -(OC₆F₁₂)ₐ-(OC₅F₁₀)_{b}-(OC₄F₈)_{c}-(OC₃F₆)_{d}-(OC₂F₄)ₑ-(OCF₂)_{f}-. PFPE corresponds to a perfluoro(poly)ether group. In the formula, a, b, c, d, e and f are each independently an integer of 0 or more and 200 or less, and the sum of a, b, c, d, e and f is at least 1. Preferably, a, b, c, d, e and f are each independently an integer of 0 or more and 100 or less. The sum of a, b, c, d, e and f is preferably 5 or more, more preferably 10 or more, for example, 10 or more and 100 or less. The occurrence order of respective repeating units in parentheses with a symbol a, b, c, d, e or f is not limited in the formula.

For example, these repeating units may be linear or branched, and is preferably linear. For example,-(OC₆F₁₂)- may be -(OCF₂CF₂CF₂CF₂CF₂CF₂)-,-(OCF(CF₃)CF₂CF₂CF₂CF₂)-, -(OCF₂CF(CF₃)CF₂CF₂CF₂)-,-(OCF₂CF₂CF(CF₃)CF₂CF₂)-, -(OCF₂CF₂CF₂CF(CF₃)CF₂)-,-(OCF₂CF₂CF₂CF₂CF(CF₃))-, or the like, and is preferably-(OCF₂CF₂CF₂CF₂CF₂CF₂)-. For example, -(OC₅F₁₀)- may be-(OCF₂CF₂CF₂CF₂CF₂)-, -(OCF(CF₃)CF₂CF₂CF₂)-,-(OCF₂CF(CF₃)CF₂CF₂)-, -(OCF₂CF₂CF(CF₃)CF₂)-, or-(OCF₂CF₂CF₂CF(CF₃))-, and is preferably-(OCF₂CF₂CF₂CF₂CF₂)-. For example, -(OC₄F₆)- may be any of -(OCF₂CF₂CF₂CF₂)-, -(OCF(CF₃)CF₂CF₂)-,-(OCF₂CF(CF₃)CF₂)-, -(OCF₂CF₂CF(CF₃))-, -(OC(CF₃)₂CF₂)-,-(OCF₂C(CF₃)₂)-, -(OCF(CF₃)CF(CF₃))-, -(OCF(C₂F₅)CF₂)- and -(OCF₂CF(C₂F₅))-, and is preferably -(OCF₂CF₂CF₂CF₂)-. For example, -(OC₃F₆)- may be any of -(OCF₂CF₂CF₂)-,-(OCF(CF₃)CF₂)- and -(OCF₂CF(CF₃))-, and is preferably-(OCF₂CF₂CF₂)-. For example, -(OC₂F₄)- may be any of-(OCF₂CF₂)- and -(OCF(CF₃))-, and is preferably-(OCF₂CF₂)-.

In one embodiment, PFPE is -(OC₃F₆)_{d}-: wherein d is an integer of 1 or more and 200 or less, preferably 5 or more and 200 or less, more preferably 10 or more and 200 or less. PFPE is preferably -(OCF₂CF₂CF₂)_{d}-: wherein d is an integer of 1 or more and 200 or less, preferably 5 or more and 200 or less, more preferably 10 or more and 200 or less; or -(OCF(CF₃)CF₂)_{d}-: wherein d is an integer of 1 or more and 200 or less, preferably 5 or more and 200 or less, more preferably 10 or more and 200 or less. PFPE is more preferably -(OCF₂CF₂CF₂)_{d}-: wherein d is an integer of 1 or more and 200 or less, preferably 5 or more and 200 or less, more preferably 10 or more and 200 or less.

In one embodiment, PFPE is preferably -(OC₃F₆)_{d}-, d is an integer of 10 or more and 100 or less, d is more preferably an integer of 15 or more and 50 or less, and d is further preferably an integer of 25 or more and 35 or less.

In another embodiment, PFPE is -(OC₄F₈)_{c}-(OC₃F₆)_{d}-(OC₂F₄)ₑ-(OCF₂)_{f}-: wherein c and d are each independently an integer of 0 or more and 30 or less, e and f are each independently an integer of 1 or more and 200 or less, preferably 5 or more and 200 or less, more preferably 10 or more and 200 or less, the sum of c, d, e and f is at least 5 or more, preferably 10 or more, and the occurrence order of respective repeating units in parentheses with a suffix c, d, e or f is not limited in the formula. PFPE is preferably -(OCF₂CF₂CF₂CF₂)_{c}-(OCF₂CF₂CF₂)_{d}-(OCF₂CF₂)ₑ-(OCF₂)_{f}-. In one embodiment, for example, PFPE may be -(OC₂F₄)ₑ-(OCF₂)_{f}-: wherein e and f are each independently an integer of 1 or more and 200 or less, preferably 5 or more and 200 or less, more preferably 10 or more and 200 or less, and the occurrence order of respective repeating units in parentheses with a suffix e or f is not limited in the formula.

In still another embodiment, PFPE is a group represented by -(R⁶-R⁷)_{g}-. In the formula, R⁶ is OCF₂ or OC₂F₄, preferably OC₂F₄. In the formula, R⁷ is a group selected from OC₂F₄, OC₃F₆, OC₄F₈, OC₅F₁₀ and OC₆F₁₂, or a combination of two or three groups independently selected from these groups. R⁷ is preferably a group selected from OC₂F₄, OC₃F₆ and OC₄F₈, a group selected from OC₃F₆, OC₄F₈, OC₅F₁₀ and OC₆F₁₂, or a combination of two or three groups independently selected from these groups. The combination of two or three groups independently selected from OC₂F₄, OC₃F₆ and OC₄F₈ is not limited, and examples thereof include -OC₂F₄OC₃F₆-,-OC₂F₄OC₄F₈-, -OC₃Fe₆OC₂F₄-, -OC₃F₆OC₃F₆-, -OC₃F₆OC₄F₈-,-OC₄F₈OC₄F₈-, -OC₄F₈OC₃F₆-, -OC₄F₈OC₂F₄-,-OC₂F₄OC₂F₄OC₃F₆-, -OC₂F₄OC₂F₄OC₄F₈-, -OC₂F₄OC₃F₆OC₂F₄-,-OC₂F₄OC₃F₆OC₃F₆-, -OC₂F₄OC₄F₈OC₂F₄-, -OC₃F₆OC₂F₄OC₂F₄-,-OC₃F₆OC₂F₄OC₃F₆-, -OC₃F₆OC₃F₆OC₂F₄-, and-OC₄F₈OC₂F₄OC₂F₄-. g is an integer of 2 or more, preferably 3 or more, more preferably 5 or more, and 100 or less, preferably 50 or less. In the formulae, for example, OC₂F₄, OC₃F₆, OC₄F₈, OC₅F₁₀ and OC₆F₁₂ may be linear or branched, and are preferably linear. In this embodiment, PFPE is preferably -(OC₂F₄-OC₃F₆)_{g}- or-(OC₂F₄-OC₄F₈)_{g}-.

The ratio of e to f (hereinafter, "e/f ratio") in PFPE is 0.1 or more and 10 or less, preferably 0.2 or more and 5 or less, more preferably 0.2 or more and 2 or less, further preferably 0.2 or more and 1.5 or less, still more preferably 0.2 or more and 0.85 or less. When the e/f ratio is 10 or less, lubricity, friction durability and chemical resistance (for example, durability to artificial sweat) of a surface-treating layer obtained from the compound are more improved. As the e/f ratio is lower, lubricity and friction durability of the surface-treating layer are more improved. On the other hand, when the e/f ratio is 0.1 or more, stability of the compound can be more improved. As the e/f ratio is higher, stability of the compound is more improved.

In one embodiment, the e/f ratio is 0.2 or more and 0.95 or less, more preferably 0.2 or more and 0.9 or less.

In one embodiment, the e/f ratio is preferably 1.0 or more, more preferably 1.0 or more and 2.0 or less from the viewpoint of heat resistance.

The stability represents difficulty of decomposition of a PEPE chain included in the PFPE-containing compound. Such a compound high in stability represents the compound including a PFPE chain hardly decomposed by, for example, heat, acid or alkali. The chemical resistance represents difficulty of decomposition of the PFPE chain, and difficulty of decomposition of a binding portion (siloxane bond) of glass and the PFPE-containing compound. Favorable chemical resistance of a surface-treating layer means difficulty of the occurrence of a hydrolysis reaction in the surface-treating layer, for example, means difficulty of the occurrence of a hydrolysis reaction even in an acid or alkaline condition.

In one embodiment, PFPE is, independently at each occurrence, a group represented by -(OC₆F₁₂)ₐ-(OC₅F₁₀)_{b}-(OC₄F₈)_{c}-(OC₃F₆)_{d}-(OC₂F₄)ₑ-(OCF₂)_{f}- and PFPE has at least one branched structure. That is, in the present embodiment, PFPE has at least one CF₃ terminal (specifically, -CF₃, -C₂F₅ or the like, more specifically -CF₃). PFPE has an oxygen atom at a left terminal, bound to an Rf group, and a carbon atom at a right terminal, bound to an X¹ group in the formula. PFPE having such a structure can be included to thereby allow a layer (for example, surface-treating layer) formed by use of the PFPE-containing silane compound (alternatively, surface-treating agent including the PFPE-containing silane compound) to be more favorable in UV durability, water-repellency, oil-repellency, antifouling property (for example, prevention of attachment of contaminations such as fingerprints), chemical resistance, hydrolysis resistance, the effect of suppression of lubricity, high friction durability, heat resistance, and moisture-proof property.

In the formula, a, b, c, d, e and f are each independently an integer of 0 or more and 200 or less, and the sum of a, b, c, d, e and f is at least 1. Preferably, a, b, c, d, e and f are each independently an integer of 0 or more and 100 or less. Preferably, the sum of a, b, c, d, e and f is 5 or more, more preferably 10 or more. Preferably, the sum of a, b, c, d, e and f is 200 or less, more preferably 100 or less, and, for example, 10 or more and 200 or less, more specifically 10 or more and 100 or less. The occurrence order of respective repeating units in parentheses with a symbol a, b, c, d, e or f is not limited in the formula.

PFPE preferably has at least five branched structures, more preferably ten branched structures, particularly preferably twenty branched structures.

The number of repeating units having a branched structure based on a total number of 100 repeating units (for example, the sum of a, b, c, d, e and f) in the PFPE structure is preferably 40 or more, more preferably 60 or more, particularly preferably 80 or more. The number of repeating units having a branched structure based on a total number of 100 repeating units in the PFPE structure may be 100 or less, for example, 90 or less.

The number of repeating units having a branched structure based on a total number of 100 repeating units in the PFPE structure is preferably in the range of 40 to 100, more preferably in the range of 60 to 100, particularly preferably in the range of 80 to 100.

Examples of the branched chain in the branched structure may include CF₃.

Examples of -(OC₆F₁₂)- as the repeating unit having a branched structure may include -(OCF(CF₃)CF₂CF₂CF₂CF₂)-,-(OCF₂CF(CF₃)CF₂CF₂CF₂)-, -(OCF₂CF₂CF(CF₃)CF₂CF₂)-,-(OCF₂CF₂CF₂CF(CF₃)CF₂)-, -(OCF₂CF₂CF₂CF₂CF(CF₃))-. Examples of -(OC₅F₁₀)- may include -(OCF(CF₃)CF₂CF₂CF₂)-,-(OCF₂CF(CF₃)CF₂CF₂)-, -(OCF₂CF₂CF(CF₃)CF₂)-,-(OCF₂CF₂CF₂CF(CF₃))-. Examples of -(OC₄F₈)- may include-(OCF(CF₃)CF₂CF₂)-, -(OCF₂CF(CF₃)CF₂)-, -(OCF₂CF₂CF(CF₃))-,-(OC(CF₃)₂CF₂)-, -(OCF₂C(CF₃)₂)-, -(OCF(CF₃)CF(CF₃))-,-(OCF(C₂F₅)CF₂)- and -(OCF₂CF(C₂F₅))-. Examples of - (OC₃F₆)-may include -(OCF(CF₃)CF₂)- and -(OCF₂CF(CF₃))-. Examples of -(OC₂F₄)- may include - (OCF(CF₃))-.

PFPE can include not only the repeating unit having a branched structure, but also a linear repeating unit. Examples of the linear repeating unit can include-(OCF₂CF₂CF₂CF₂CF₂CF₂)-, -(OCF₂CF₂CF₂CF₂CF₂)-,-(OCF₂CF₂CF₂CF₂)-, -(OCF₂CF₂CF₂)-, -(OCF₂CF₂)-.

Preferably, repeating units -(OC₆F₁₂)-, -(OC₅F₁₀)-,-(OC₄F₈)-, and -(OC₃F₆)- in PFPE have a branched structure.

More preferably, PFPE includes repeating units of a branched structure, OC₆F₁₂, OC₅F₁₀, OC₄F₈, and OC₃F₆.

In one embodiment, PFPE is -(OC₃F₆)_{d}- (wherein d is 1 or more and 200 or less, preferably 5 or more and 200 or less, more preferably an integer of 10 or more and 200 or less), and PFPE has at least one branched structure.

In the present embodiment, PFPE may further include a linear repeating unit -(OCF₂CF₂CF₂)-.

In the embodiment, PFPE preferably includes a repeating unit of a branched structure, OC₃F₆. PFPE is more preferably represented by formula: -(OCF₂CF(CF₃))_{d}. In the formula, d is 1 or more and 200 or less, preferably 5 or more and 200 or less, more preferably an integer of 10 or more and 200 or less.

In another embodiment, PFPE is -(OC₄F₈)_{c}-(OC₃F₆)_{d}-(OC₂F₄)ₑ-(OCF₂)_{f}- (wherein c and d are each independently an integer of 0 or more and 30 or less, e and f are each independently an integer of 1 or more and 200 or less, preferably 5 or more and 200 or less, more preferably an integer of 10 or more and 200 or less, the sum of c, d, e and f is at least 5 or more, preferably 10 or more, and the occurrence order of respective repeating units in parentheses with a suffix c, d, e or f is not limited in the formula), and PFPE has at least one branched structure.

In still another embodiment, PFPE is a group represented by -(R⁶-R⁷)ⱼ-, and PFPE has at least one branched structure. In the formula, R⁶ is OCF₂ or OC₂F₄, preferably OC₂F₄. In the formula, R⁷ is a group selected from OC₂F₄, OC₃F₆, OC₄F₈, OC₅F₁₀ and OC₆F₁₂, or a combination of two or three groups independently selected from these groups. Preferably, R⁷ is a group selected from OC₂F₄, OC₃F₆ and OC₄F₈, OC₃F₆, OC₄F₈, OC₅F₁₀ and OC₆F₁₂, or a combination of two or three groups independently selected from these groups. The combination of two or three groups independently selected from OC₂F₄, OC₃F₆ and OC₄F₈ is not limited, and examples thereof include -OC₂F₄OC₃F₆-, -OC₂F₄OC₄F₈-, -OC₃F₆OC₂F₄-, -OC₃F₆OC₃F₆-, -OC₃F₆OC₄F₈-,-OC₄F₈OC₄F₈-, -OC₄F₈OC₃F₆-, -OC₄F₈OC₂F₄-, -OC₂F₄OC₂F₄OC₃F₆-,-OC₂F₄OC₂F₄OC₄F₈-, -OC₂F₄OC₃F₆OC₂F₄-, -OC₂F₄OC₃F₆OC₃F₆-,-OC₂F₄OC₄F₈OC₂F₄-, -OC₃F₆OC₂F₄OC₂F₄-, -OC₃F₆OC₂F₄OC₃F₆-,-OC₃F₆OC₃F₆OC₂F₄-, and -OC₄F₈OC₂F₄OC₂F₄-. j is an integer of 2 or more, preferably 3 or more, more preferably 5 or more, and 100 or less, preferably 50 or less. In the formula, OC₂F₄, OC₃F₆, OC₄F₈, OC₅F₁₀ and OC₆F₁₂ preferably have a branched structure.

More preferably, in the embodiment, PFPE consists of repeating units of a branched structure, OC₆F₁₂, OC₅F₁₀, OC₄F₈, and OC₃F₆.

The number average molecular weight of the Rf-PFPE moiety or the -PFPE-moiety is not limited, and is 500 to 30,000, preferably 1,000 to 20,000, more preferably 2,000 to 15,000, further preferably 2,000 to 10,000. The number average molecular weight is defined as a value obtained by ¹⁹F-NMR measurement.

In one embodiment, the number average molecular weight of the Rf-PFPE-moiety or the -PFPE-moiety is preferably 4,000 to 6,000, more preferably 4,500 to 5,500.

In another embodiment, the number average molecular weight of the Rf-PFPE-moiety or the -PFPE-moiety can be 4,000 to 30,000, preferably 5,000 to 10,000.

In another embodiment, the number average molecular weight of the Rf-PFPE-moiety or the -PFPE-moiety can be 2,000 to 10,000, preferably 2,000 to 5,000.

In the formula, X represents, each independently at each occurrence, a single bond or a di- to decavalent organic group. X is understood to be a linker for connecting between a perfluoropolyether moiety (namely, Rf-PFPE moiety or -PFPE- moiety) that provides mainly water-repellency, surface lubricity, and the like, and a moiety (namely, group in parentheses with a symbol α) that provides a binding ability to a base material, in any PFPE-containing silane compound represented by formulae (1a) and (1b).

X preferably represents, each independently at each occurrence, a single bond, or a di- to decavalent organic group having at least one selected from the group consisting of -C₆H₄- (namely, -phenylene-, hereinafter, representing a phenylene group.), -CO- (carbonyl group), -NR⁴- and -SO₂-. R⁴ represents, each independently at each occurrence, a hydrogen atom, a phenyl group, or a C₁₋₆ alkyl group (preferably a methyl group), preferably a hydrogen atom or a methyl group. It is preferable that-C₆H₄-, -CO-, -NR⁴- or -SO₂- be included in a molecular backbone of the PFPE-containing silane compound. The molecular backbone here represents a relatively longest binding chain in a molecule of the PFPE-containing silane compound.

X preferably represents, each independently at each occurrence, a single bond, or a di- to decavalent organic group having at least one selected from the group consisting of -C₆H₄-, -CONR⁴-, -CONR⁴-C₆H₄-, -C₆H₄-CONR⁴-,-CO-, -CO-C₆H₄-, -C₆H₄-CO-, -SO₂NR⁴-, -SO₂NR⁴-C₆H₄-, -C₆H₄-SO₂NR⁴-, -SO₂-, -SO₂-C₆H₄-, and -C₆H₄-SO₂-. It is preferable that -C₆H₄-, -CONR⁴-, -CONR⁴-C₆H₄-, -C₆H₄-CONR⁴-, -CO-, -CO-C₆H₄-, -C₆H₄-CO-, -SO₂NR⁴-, -SO₂NR⁴-C₆H₄-, -C₆H₄-SO₂NR⁴-, -SO₂-, -SO₂-C₆H₄-, or -C₆H₄-SO₂- be included in the molecular backbone of the PFPE-containing silane compound.

X more preferably represents, each independently at each occurrence, a single bond, or a di- to decavalent organic group having at least one selected from the group consisting of -C₆H₄-, -CONR⁴-, -CONR⁴-C₆H₄-, -CO-, -CO-C₆H₄-, -SO₂NR⁴-, -SO₂NR⁴-C₆H₄-, -SO₂-, and -SO₂-C₆H₄-. It is preferable that -C₆H₄-, -CONR⁴-, -CONR⁴-C₆H₄-, -CO-, -CO-C₆H₄-, -SO₂NR⁴-, -SO₂NR⁴-C₆H₄-, -SO₂-, or -SO₂-C₆H₄- be included in the molecular backbone of the PFPE-containing silane compound.

In the formula, α is an integer of 1 to 9, and β is an integer of 1 to 9. Such α and β can be varied depending on the valence of X. In the formula (1a), the sum of α and β is the same as the valence of X. For example, when X is a decavalent organic group, the sum of α and β is 10, and, for example, α can be 9 and β can be 1, α can be 5 and β can be 5, or α can be 1 and β can be 9. When X is a divalent organic group, α and β are each 1. In the formula (1b), α is a value obtained by subtracting 1 from the valence of X.

X is preferably a di- to heptavalent, more preferably di- to tetravalent, further preferably a divalent organic group.

In one embodiment, X is a di- to tetravalent organic group, α is 1 to 3, and β is 1.

In another embodiment, X is a single bond or a divalent organic group, α is 1, and β is 1. In this case, the formulae (1a) and (1b) are represented by the following formulae (1a') and (1b'), respectively.

Rf-PFPE-X-CR^{a}ₖR^{b}ₗR^{c}ₘ ··· (1a')

R^{c}ₘR^{b}ₗR^{a}ₖC-X-PFPE-X-CR^{a}ₖR^{b}ₗR^{c}ₘ ··· (1b')

In a preferable embodiment, X represents, each independently at each occurrence, a single bond, or a divalent organic group having 1 to 12 carbon atoms, more preferably a single bond, or a divalent organic group having 1 to 9 carbon atoms, further preferably a single bond, or a divalent organic group having 1 to 6 carbon atoms, particularly preferably a single bond, or a divalent organic group having 1 to 3 carbon atoms.

X is not limited, and examples thereof include a divalent group represented by the following formula:

-(R³¹)_{p'}-(X^{a})_{q'}-

wherein:
R³¹ represents, each independently at each occurrence, a single bond, -(CH₂)_{s'}- or an o-, m- or p-phenylene group, preferably -(CH₂)_{s'}-,
s' is an integer of 1 to 20, preferably an integer of 1 to 6, more preferably an integer of 1 to 3, still more preferably 1 or 2,
X^{a} represents, each independently at each occurrence, -(X^{b})_{l'}-,
X^{b} represents, each independently at each occurrence, a group selected from the group consisting of -O-, -S-, an o-, m- or p-phenylene group, -C(O)O-,-Si(R³³)₂-, -(Si(R³³)₂O)_{m'}-Si(R³³)₂-, -CONR³⁴-, -O-CONR³⁴-,-NR³⁴- and -(CH₂)_{n'}-,
R³³ represents, each independently at each occurrence, a phenyl group, a C₁₋₆ alkyl group or a C₁₋₆ alkoxy group, preferably a phenyl group or a C₁₋₆ alkyl group, more preferably a methyl group,
R³⁴ represents, each independently at each occurrence, a hydrogen atom, a phenyl group or a C₁₋₆ alkyl group (preferably a methyl group),
m' is, each independently at each occurrence, an integer of 1 to 100, preferably an integer of 1 to 20,
n' is, each independently at each occurrence, an integer of 1 to 20, preferably an integer of 1 to 6, more preferably an integer of 1 to 3,
l' is an integer of 1 to 10, preferably an integer of 1 to 5, more preferably an integer of 1 to 3,
p' is 0, 1 or 2, and
q' is 0 or 1,
provided that at least one of p' and q' is 1, and the occurrence order of respective repeating units in parentheses with a symbol p' or q' is not limited in the formula. R³¹ and X^{a} (typically any hydrogen atom in R³¹ and X^{a}) are optionally substituted with one or more substituents selected from a fluorine atom, a C₁₋₃ alkyl group and a C₁₋₃ fluoroalkyl group.

Preferably, X is -(R³¹)_{p'}-(X^{a})_{q'}-R³²-. R³² is a single bond, -(CH₂)_{t'}- or an o-, m- or p-phenylene group, preferably -(CH₂)_{t'}-. t' is an integer of 1 to 20, preferably an integer of 2 to 6, more preferably an integer of 2 to 3. R³² (typically any hydrogen atom in R³²) is optionally substituted with one or more substituents selected from a fluorine atom, a C₁₋₃ alkyl group and a C₁₋₃ fluoroalkyl group.

Preferably, X can be, each independently at each occurrence,
a C₁₋₂₀ alkylene group,
-R³¹-X^{c}-R³²-, or
-X^{d}-R³²-
wherein R³¹ and R³² have the same meaning as described above.

More preferably, X is
a C₁₋₂₀ alkylene group,
-(CH₂)_{s'}-X^{c}-,
-(CH₂)_{s'}-X^{c}-(CH₂)_{t'}-
-X^{d}-, or
-X^{d}-(CH₂)_{t'}-
wherein s' and t' have the same meaning as described above.

In the formula, X^{c} represents
-O-,
-S-,
-C(O)O-,
-CONR³⁴-,
-O-CONR³⁴-,
-Si(R³³)₂-,
-(Si(R³³)₂O)_{m'}-Si(R³³)₂-,
-O-(CH₂)_{u'}-(Si(R³³)₂O)_{m'}-Si(R³³)₂-,
-O-(CH₂)_{u'}-Si(R³³)₂-O-Si(R³³)₂-CH₂CH₂-Si(R³³)₂-O-Si(R³³)₂-,
-O-(CH₂)_{u'}-Si(OCH₃)₂OSi(OCH₃)₂-,
-CONR³⁴-(CH₂)_{u'}-(Si(R³³)₂O)_{m'}-Si(R³³)₂-,
-CONR³⁴-(CH₂)_{u'}-N(R³⁴)-, or
-CONR³⁴-(o-, m- or p-phenylene)-Si(R³³)₂-
wherein R³³, R³⁴ and m' have the same meaning as described above, and
u' is an integer of 1 to 20, preferably an integer of 2 to 6, more preferably an integer of 2 to 3. X^{c} is preferably -O-.

In the formula, X^{d} represents
-S-,
-C(O)O-,
-CONR³⁴-,
-CONR³⁴-(CH₂)_{u'}-(Si(R³³)₂O)_{m'}-Si(R³³)₂-,
-CONR³⁴-(CH₂)_{u'}-N(R³⁴)-, or
-CONR³⁴-(o-, m- or p-phenylene)-Si(R³³)₂-
wherein respective signs have the same meaning as described above.

More preferably, X can be
a C₁₋₂₀ alkylene group,
-(CH₂)_{s'}-X^{c}-(CH₂)_{t'}-, or
-X^{d}-(CH₂)_{t'}-
wherein respective signs have the same meaning as described above.

Still more preferably, X is
a C₁₋₂₀ alkylene group,
-(CH₂)_{s'}-O-(CH₂)_{t'}-,
-(CH₂)_{s'}-(Si(R³³)₂O)_{m'}-Si(R³³)₂-(CH₂)_{t'}-,
-(CH₂)_{s'}-O-(CH₂)_{u'}-(Si(R³³)₂O)_{m'}-Si(R³³)₂-(CH₂)_{t'}-, or
-(CH₂)_{s'}-O-(CH₂)_{t'}-Si(R³³)₂-(CH₂)_{u'}-Si(R³³)₂-(CᵥH₂ᵥ)-wherein R³³, m', s', t' and u' have the same meaning as described above, and v is an integer of 1 to 20, preferably an integer of 2 to 6, more preferably an integer of 2 to 3.

In the formula, -(CᵥH₂ᵥ)- may be linear or branched, and can be, for example, -CH₂CH₂-, -CH₂CH₂CH₂-, -CH(CH₃)-, or -CH(CH₃)CH₂-.

In one embodiment, X can be a group represented by-(O)ₜ₁-(R^{f1}O)ₜ₂-R^{f2}-(C(=O)N(R^{f3}))ₜ₃-R^{f4}-.

t1 is 0 or 1.

R^{f1} is a fluoroalkylene group not having any branched structure including one or more hydrogen atoms. R^{f1} is preferably a C₂₋₆ fluoroalkylene group. The number of hydrogen atom(s) included in R^{f1} is preferably in the range of 1 to 4, more preferably 1 or 2.

When two or more kinds of R^{f1}O are present in (R^{f1}O)ₜ₂, the occurrence order of respective (R^{f1}O) is not limited in the formula.

t2 is an integer of 0 to 4, more preferably an integer of 0 to 2.

R^{f2} is a single bond, a perfluoroalkylene group not having any branched structure, or a fluoroalkylene group not having any branched structure including one or more hydrogen atoms. The perfluoroalkylene group or the fluoroalkylene group preferably includes 1 to 10 carbon atoms.

R^{f3} is a hydrogen atom, or an alkyl group (preferably a C₁₋₄ alkyl group).

t3 is 0 or 1.

When t3 is 0, R^{f2} is preferably a single bond. In this case (namely, in the case of directly binding (R^{f1}O)ₜ₂ and R^{f4}), (R^{f1}O) in (R^{f1}O)ₜ₂ which binds to R^{f4} is preferably a group represented by (R^{f5}CH₂O). R^{f5} is a group which has a smaller number of carbon atoms than R^{f1} by one carbon atom and which is a perfluoroalkylene group, or a fluoroalkylene group having one or more hydrogen atoms. R^{f5} is preferably a perfluoroalkylene group. (R^{f5}CH₂O) is preferably (CF₂CH₂O), (CF₂CF₂CH₂O), (CF₂CF₂CF₂CH₂O), (CF₂CF₂CF₂CF₂CH₂O), or the like. In this case, t2 is preferably 1.

When t3 is 1, t2 is 0 to 2 and R^{f2} is preferably a perfluoroalkylene group, or a fluoroalkylene group having one or more hydrogen atoms, more preferably a perfluoroalkylene group, particularly preferably a C₁₋₆ perfluoroalkylene group.

R^{f4} is a single bond, an alkylene group having 1 to 10 carbon atoms, a group having an ethereal oxygen atom at a terminal of an alkylene group having 1 to 10 carbon atoms (provided that such a terminal is a terminal bound to (SiR^{a}ₖR^{b}ₗR^{c}m).), a group having an ethereal oxygen atom between carbon-carbon atoms of an alkylene group having 2 to 10 carbon atoms, or a group having an ethereal oxygen atom at a terminal (provided that such a terminal is a terminal bound to (SiR^{a}ₖR^{b}ₗR^{c}m).) of an alkylene group having 2 to 10 carbon atoms and an ethereal oxygen atom between carbon-carbon atoms of such an alkylene group. Examples of such a group having an ethereal oxygen atom include -CH₂CH₂-O- and -CH₂CH₂-O-CH₂-.

R^{f4} is preferably a single bond or a C₁₋₄ alkylene group, more preferably a single bond or a C₁₋₂ alkylene group.

Examples of X can include
-(O)ₜ₁-(R^{f1}O)ₜ₂-,
-(O)ₜ₁-(R^{f1}O)ₜ₂-CH₂O-,
-(O)ₜ₁-(R^{f1}O)ₜ₂-CH₂OCH₂-,
-(O)ₜ₁-(R^{f1}O)ₜ₂-CH₂O-(CH₂)₂-O-,
-(O)ₜ₁-(R^{f1}O)ₜ₂-CH₂O-(CH₂)₂-O-CH₂-,
-(O)ₜ₁-(R^{f1}O)ₜ₂-R^{f2}-C(O)NH-,
-(O)ₜ₁-(R^{f1}O)ₜ₂-R^{f2}-C(O)NHCH₂-,
-(O)ₜ₁-(R^{f1}O)ₜ₂-R^{f2}-C(O)NH(CH₂)₂-,
-(O)ₜ₁-(R^{f6}CH₂O)-CH₂-,
-(O)ₜ₁-(R^{f6}CH₂O)-CH₂-O-CH₂-,
-C(O)NH-R^{f4}-, or
-(O)ₜ₁-R^{f6}CH₂OCF₂CHFOCF₂CF₂CF₂-C(O)NH-R^{f4}- (for example,-(O)ₜ₁-CF₂CH₂OCF₂CHFOCF₂CF₂CF₂-C(O)NH-R^{f4}-). R^{f1}, R^{f2}, R^{f4}, t1 and t2 have the same meaning as described above. t1 is preferably 1. R^{f6} is a perfluoroalkylene group not having any branched structure.

The X group is optionally substituted with one or more substituents selected from a fluorine atom, a C₁₋₃ alkyl group and a C₁₋₃ fluoroalkyl group (preferably a C₁₋₃ perfluoroalkyl group).

In another embodiment, examples of the X group include the following groups: 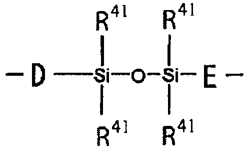 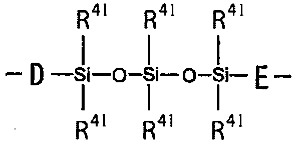 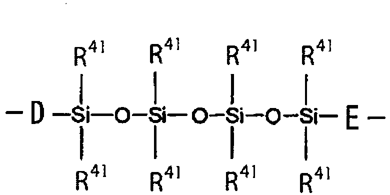 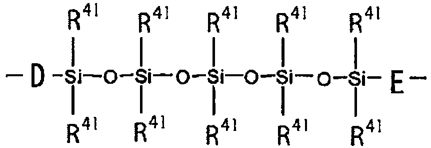 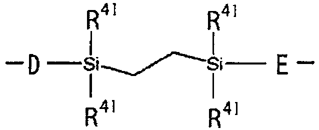 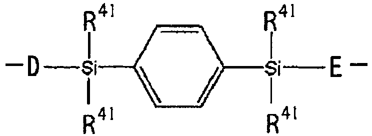 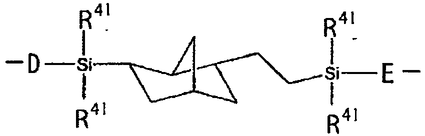
wherein R⁴¹ is, each independently a hydrogen atom, a phenyl group, an alkyl group having 1 to 6 carbon atoms, or a C₁₋₆ alkoxy group, preferably a methyl group;
D is a group selected from
   -CH₂O(CH₂)₂-,
   -CH₂O(CH₂)₃-,
   -CF₂O(CH₂)₃-,
   -(CH₂)₂-,
   -(CH₂)₃-,
   -(CH₂)₄-,
   -CONH-(CH₂)-,
   -CONH-(CH₂)₂-,
   -CONH-(CH₂)₃-,
   -CON(CH₃)-(CH₂)₃-,
   -CON(Ph)-(CH₂)₃- (wherein Ph means phenyl), and

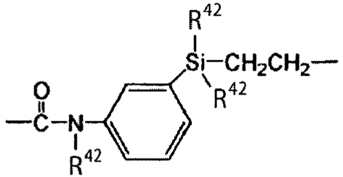

(wherein R⁴² each independently represents a hydrogen atom, a C₁₋₆ alkyl group or a C₁₋₆ alkoxy group, preferably a methyl group or a methoxy group, more preferably a methyl group.),
E is -(CH₂)ₙ- (n is an integer of 2 to 6), and
D is bound to PFPE as a molecular backbone and E is bound to a group opposite to PFPE.

Specific examples of X include:
-CH₂O(CH₂)₂-,
-CH₂O(CH₂)₃-,
-CH₂O(CH₂)₆-,
-CH₂O(CH₂)₃Si(CH₃)₂OSi(CH₃)₂(CH₂)₂-,
-CH₂O(CH₂)₃Si(CH₃)₂OSi(CH₃)₂OSi(CH₃)₂(CH₂)₂-,
-CH₂O(CH₂)₃Si(CH₃)₂O(Si(CH₃)₂O)₂Si(CH₃)₂(CH₂)₂-,
-CH₂O(CH₂)₃Si(CH₃)₂O(Si(CH₃)₂O)₃Si(CH₃)₂(CH₂)₂-,
-CH₂O(CH₂)₃Si(CH₃)₂O(Si(CH₃)₂O)₁₀Si(CH₃)₂(CH₂)₂-,
-CH₂O(CH₂)₃Si(CH₃)₂O(Si(CH₃)₂O)₂₀Si(CH₃)₂(CH₂)₂-,
-CH₂OCF₂CHFOCF₂-,
-CH₂OCF₂CHFOCF₂CF₂-,
-CH₂OCF₂CHFOCF₂CF₂CF₂-,
-CH₂OCH₂CF₂CF₂OCF₂-,
-CH₂OCH₂CF₂CF₂OCF₂CF₂-,
-CH₂OCH₂CF₂CF₂OCF₂CF₂CF₂-,
-CH₂OCH₂CF₂CF₂OCF(CF₃)CF₂OCF₂-,
-CH₂OCH₂CF₂CF₂OCF(CF₃)CF₂OCF₂CF₂-,
-CH₂OCH₂CF₂CF₂OCF(CF₃)CF₂OCF₂CF₂CF₂-,
-CH₂OCH₂CHFCF₂OCF₂-,
-CH₂OCH₂CHFCF₂OCF₂CF₂-,
-CH₂OCH₂CHFCF₂OCF₂CF₂CF₂-,
-CH₂OCH₂CHFCF₂OCF(CF₃)CF₂OCF₂-,
-CH₂OCH₂CHFCF₂OCF(CF₃)CF₂OCF₂CF₂-,
-CH₂OCH₂CHFCF₂OCF(CF₃)CF₂OCF₂CF₂CF₂-,
-CH₂OCH₂(CH₂)₇CH₂Si(OCH₃)₂OSi(OCH₃)₂(CH₂)₂Si(OCH₃)₂OSi(OCH₃)₂(C H₂)₂-,
-CH₂OCH₂CH₂CH₂Si(OCH₃)₂OSi(OCH₃)₂(CH₂)₃-,
-CH₂OCH₂CH₂CH₂Si(OCH₂CH₃)₂OSi(OCH₂CH₃)₂(CH₂)₃-,
-CH₂OCH₂CH₂CH₂Si(OCH₃)₂OSi(OCH₃)₂(CH₂)₂-,
-CH₂OCH₂CH₂CH₂Si(OCH₂CH₃)₂OSi(OCH₂CH₃)₂(CH₂)₂-,
-(CH₂)₂-,
-(CH₂)₃-,
-(CH₂)₄-,
-(CH₂)₅-,
-(CH₂)₆-,
-(CH₂)₂-Si(CH₃)₂-(CH₂)₂-,
-CONH-(CH₂)-,
-CONH-(CH₂)₂-,
-CONH-(CH₂)₃-,
-CON(CH₃)-(CH₂)₃-,
-CON(Ph)-(CH₂)₃- (wherein Ph means phenyl),
-CONH-(CH₂)₆-,
-CON(CH₃)-(CH₂)₆-,
-CON(Ph)-(CH₂)₆- (wherein Ph means phenyl),
-CONH-(CH₂)₂NH(CH₂)₃-,
-CONH-(CH₂)₆NH(CH₂)₃-,
-CH₂O-CONH-(CH₂)₃-,
-CH₂O-CONH-(CH₂)₆-,
-S-(CH₂)₃-,
-(CH₂)₂S(CH₂)₃-,
-CONH-(CH₂)₃Si(CH₃)₂OSi(CH₃)₂(CH₂)₂-,
-CONH-(CH₂)₃Si(CH₃)₂OSi(CH₃)₂OSi(CH₃)₂(CH₂)₂-,
-CONH-(CH₂)₃Si(CH₃)₂O(Si(CH₃)₂O)₂Si(CH₃)₂(CH₂)₂-,
-CONH-(CH₂)₃Si(CH₃)₂O(Si(CH₃)₂O)₃Si(CH₃)₂(CH₂)₂-,
-CONH-(CH₂)₃Si(CH₃)₂O(Si(CH₃)₂O)₁₀Si(CH₃)₂(CH₂)₂-,
-CONH-(CH₂)₃Si(CH₃)₂O(Si(CH₃)₂O)₂₀Si(CH₃)₂(CH₂)₂-,
-C(O)O-(CH₂)₃-,
-C(O)O-(CH₂)₆-,
-CH₂-O-(CH₂)₃-Si(CH₃)₂-(CH₂)₂-Si(CH₃)₂-(CH₂)₂-,
-CH₂-O-(CH₂)₃-Si(CH₃)₂-(CH₂)₂-Si(CH₃)₂-CH(CH₃)-,
-CH₂-O-(CH₂)₃-Si(CH₃)₂-(CH₂)₂-Si(CH₃)₂-(CH₂)₃-,
-CH₂-O-(CH₂)₃-Si(CH₃)₂-(CH₂)₂-Si(CH₃)₂-CH(CH₃)-CH₂-,
-OCH₂-,
-O(CH₂)₃-,
-OCFHCF₂-,

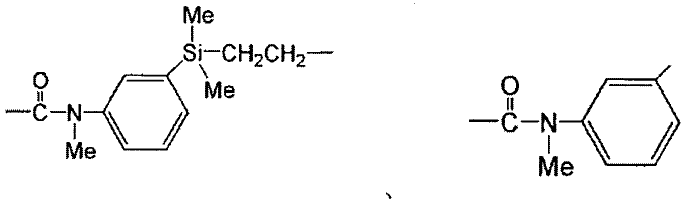

Specific examples of X further include
a single bond,
-CH₂OCH₂-, and
-CH₂OCF₂CHFOCF₂CF₂CF₂-C(O)NH-CH₂-.

In a more preferable embodiment, X represents, each independently at each occurrence, a single bond, an alkylene group having 1 to 6 carbon atoms, -R⁵¹-C₆H₄-R⁵²-, -R⁵¹-CONR⁴-R⁵²-, -R⁵¹-CONR⁴-C₆H₄-R⁵²-, -R⁵¹-C₆H₄-CONR⁴-R⁵²-, - R⁵¹-CO-R⁵²-, -R⁵¹-CO-C₆H₄-R⁵²-, -R⁵¹-C₆H₄-CO-R⁵²-, -R⁵¹-SO₂NR⁴-R⁵²-, -R⁵¹-SO₂NR⁴-C₆H₄-R⁵²-, -R⁵¹-C₆H₄-SO₂NR⁴-R⁵²-, -R⁵¹-SO₂-R⁵²-, -R⁵¹-SO₂-C₆H₄-R⁵²-, or -R⁵¹-C₆H₄-SO₂-R⁵²-. R⁵¹ and R⁵² each independently represent a single bond, or an alkylene group having 1 to 6 carbon atoms, preferably a single bond, or an alkylene group having 1 to 3 carbon atoms. R⁴ has the same meaning as described above. The alkylene group is substituted or unsubstituted, preferably unsubstituted. Examples of the substituent of the alkylene group may include a halogen atom, preferably a fluorine atom. The alkylene group is linear or branched, preferably linear.

In a further preferable embodiment, X is, each independently at each occurrence, a single bond, an alkylene group having 1 to 6 carbon atoms, -R⁵¹-C₆H₄-R⁵²-, -R⁵¹-CONR⁴-R⁵²-, -R⁵¹-CONR⁴-C₆H₄-R⁵²-, -R⁵¹-CONR⁴-C₆H₄-R⁵²-, - R⁵¹-CO-R⁵²-, -R⁵¹-CO-C₆H₄-R⁵²-, -R⁵¹-SO₂NR⁴-R⁵²-, -R⁵¹-SO₂NR⁴-C₆H₄-R⁵²-, -R⁵¹-SO₂-R⁵²-, or -R⁵¹-SO₂-C₆H₄-R⁵²-. R⁵¹ and R⁵² each independently represent a single bond, or an alkylene group having 1 to 6 carbon atoms, preferably a single bond, or an alkylene group having 1 to 3 carbon atoms. R⁴ has the same meaning as described above. The alkylene group is substituted or unsubstituted, preferably unsubstituted. Examples of the substituent of the alkylene group may include a halogen atom, preferably a fluorine atom. The alkylene group is linear or branched, preferably linear.

In a further preferable embodiment, X may be, each independently at each occurrence,
a single bond,
an alkylene group having 1 to 6 carbon atoms, preferably 1 to 3 carbon atoms,
-C₆H₄-R^{52'}-,
-CONR^{4'}-R^{52'}-,
-CONR^{4'}-C₆H₄-R^{52'}-,
-C₆H₄-CONR^{4'}-R^{52'}-,
-CO-R^{52'}-,
-CO-C₆H₄-R^{52'}-,
-C₆H₄-CO-R^{52'}-,
-SO₂NR^{4'}-R^{52'}-,
-SO₂NR^{4'}-C₆H₄-R^{52'}-,
-C₆H₄-SO₂NR^{4'}-R^{52'}-,
-SO₂-R^{52'}-,
-SO₂-C₆H₄-R^{52'}-,
-C₆H₄-SO₂-R^{52'}-,
-R^{51'}-C₆H₄-,
-R^{51'}-CONR^{4'}-,
-R^{51'}-CONR^{4'}-C₆H₄-,
-R^{51'}-C₆H₄-CONR^{4'}-,
-R^{51'}-CO-,
-R^{51'}-CO-C₆H₄-,
-R^{51'}-C₆H₄-CO-,
-R^{51'}-SO₂NR^{4'}-,
-R^{51'}-SO₂NR^{4'}-C₆H₄-,
-R^{51'}-C₆H₄-SO₂NR^{4'}-,
-R^{51'}-SO₂-,
-R^{51'}-SO₂-C₆H₄-,
-R^{51'}-C₆H₄-SO₂-,
-C₆H₄-,
-CONR^{4'}-,
-CONR^{4'}-C₆H₄-,
-C₆H₄-CONR^{4'}-,
-CO-,
-CO-C₆H₄-,
-C₆H₄-CO-,
-SO₂NR^{4'}-,
-SO₂NR^{4'}-C₆H₄-,
-C₆H₄-SO₂NR^{4'}-,
-SO₂-,
-SO₂-C₆H₄-, or
-C₆H₄-SO₂-
(wherein R^{51'} and R^{52'} are each independently a linear alkylene group having 1 to 6 carbon atoms, preferably 1 to 3 carbon atoms, and
R^{4'} is a hydrogen atom or methyl.).

In a particularly preferable embodiment, X may be, each independently at each occurrence,
a single bond,
an alkylene group having 1 to 6 carbon atoms, preferably 1 to 3 carbon atoms,
-C₆H₄-R^{52'}-,
-CONR^{4'}-R^{52'}-,
-CONR^{4'}-C₆H₄-R^{52'}-,
-CO-R^{52'}-,
-CO-C₆H₄-R^{52'}-,
-SO₂NR^{4'}-R^{52'}-,
-SO₂NR^{4'}-C₆H₄-R^{52'}-,
-SO₂-R^{52'}-,
-SO₂-C₆H₄-R^{52'}-,
-R^{51'}-C₆H₄-,
-R^{51'}-CONR^{4'}-,
-R^{51'}-CONR^{4'}-C₆H₄-,
-R^{51'}-CO-,
-R^{51'}-CO-C₆H₄-,
-R^{51'}-SO₂NR^{4'}-,
-R^{51'}-SO₂NR^{4'}-C₆H₄-,
-R^{51'}-SO₂-,
-R^{51'}-SO₂-C₆H₄-,
-C₆H₄-,
-CONR^{4'}-,
-CONR^{4'}-C₆H₄-,
-CO-,
-CO-C₆H₄-,
-SO₂NR^{4'}-,
-SO₂NR^{4'}-C₆H₄-,
-SO₂-, or
-SO₂-C₆H₄-
(wherein R^{51'} and R^{52'} are each independently a linear alkylene group having 1 to 6 carbon atoms, preferably 1 to 3 carbon atoms, and
R^{4'} is a hydrogen atom or a methyl group.).

In the present embodiment, specific examples of X include
a single bond,
an alkylene group having 1 to 6 carbon atoms,
-CONH-,
-CONH-CH₂-,
-CONH-(CH₂)₂-,
-CONH-(CH₂)₃-,
-CON(CH₃)-,
-CON(CH₃)-CH₂-,
-CON(CH₃)-(CH₂)₂-,
-CON(CH₃)-(CH₂)₃-,
-CH₂-CONH-,
-CH₂-CONH-CH₂-,
-CH₂-CONH-(CH₂)₂-,
-CH₂-CONH-(CH₂)₃-,
-CONH-C₆H₄-,
-CON(CH₃)-C₆H₄-,
-CH₂-CON(CH₃)-CH₂-,
-CH₂-CON(CH₃)-(CH₂)₂-,
-CH₂-CON(CH₃)-(CH₂)₃-,
-CO-,
-CO-C₆H₄-,
-C₆H₄-,
-SO₂NH-,
-SO₂NH-CH₂-,
-SO₂NH-(CH₂)₂-,
-SO₂NH-(CH₂)₃-,
-SO₂NH-C₆H₄-,
-SO₂N(CH₃)-,
-SO₂N(CH₃)-CH₂-,
-SO₂N(CH₃)-(CH₂)₂-,
-SO₂N(CH₃)-(CH₂)₃-,
-SO₂N(CH₃)-C₆H₄-,
-SO₂-,
-SO₂-CH₂-,
-SO₂-(CH₂)₂-,
-SO₂-(CH₂)₃-,
-SO₂-C₆H₄-.

In the embodiment, specific examples of X further include
-C₆H₄-CONH-,
-C₆H₄-CON(CH₃)-,
-C₆H₄-CO-,
-C₆H₄-SO₂NH-,
-C₆H₄-SO₂N(CH₃)-,
-C₆H₄-SO₂-.

In one embodiment, X is a single bond. In the present embodiment, PFPE and a group (namely, group in parentheses with a symbol α) having binding ability to a base material layer form a direct bond. Such a structure is considered to allow a binding force of PFPE to such a group in parentheses with a symbol α to be stronger. A carbon atom directly binding to PFPE (namely, a carbon atom bound to R^{a}, R^{b} and R^{c} in a group in parentheses with a symbol α) is considered to be less biased in charge, thereby allowing a nucleophilic reaction or the like in the carbon atom to hardly occur, and thus stably bound to the base material layer. Such a structure has the advantage of more enhancing friction durability of a surface-treating layer to be formed.

In still another embodiment, examples of the X group include the following groups: 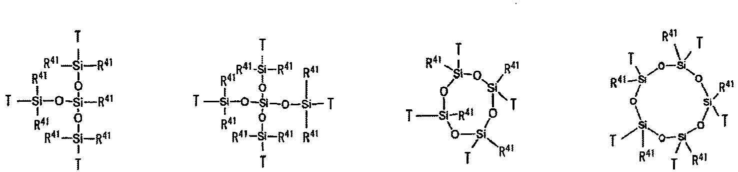 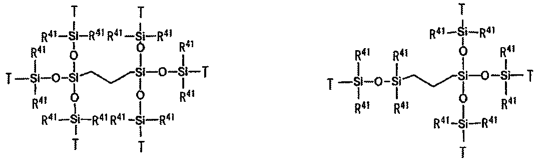 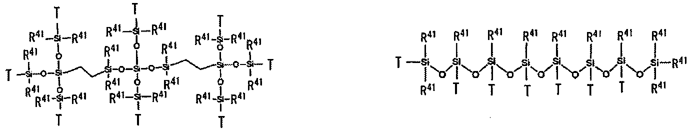 wherein
R⁴¹ is each independently a hydrogen atom, a phenyl group, an alkyl group having 1 to 6 carbon atoms, or a C₁₋₆ alkoxy group, preferably a methyl group;
any of T in such each X group is the following group bound to PFPE as a molecular backbone:
   -CH₂O(CH₂)₂-,
   -CH₂O(CH₂)₃-,
   -CF₂O(CH₂)₃-,
   - (CH₂)₂-,
   -(CH₂)₃-,
   - (CH₂)₄-,
   -CONH-(CH₂)-,
   -CONH-(CH₂)₂-,
   -CONH-(CH₂)₃-,
   -CON(CH₃)-(CH₂)₃-,
   -CON(Ph)-(CH₂)₃- (wherein Ph means phenyl), or 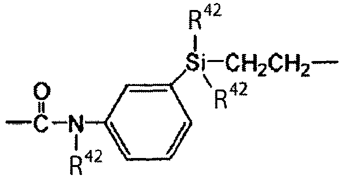 (wherein R⁴² each independently represents a hydrogen atom, a C₁₋₆ alkyl group or a C₁₋₆ alkoxy group, preferably a methyl group or a methoxy group, more preferably a methyl group), any other of T is -(CH₂)_{n"}- (n" is an integer of 2 to 6) bound to a group (namely, -CR^{a}ₖR^{b}ₗR^{c}ₘ) opposite to PFPE as a molecular backbone, and residual T, if present, can be each independently a methyl group, a phenyl group, a C₁₋₆ alkoxy group, or a radical capturing group or an UV absorbing group.

The radical capturing group is not limited as long as such a group can capture any radical generated by light irradiation, and examples thereof include any residue of a benzophenone compound, a benzotriazole compound, a benzoate ester compound, a phenyl salicylate compound, a crotonic acid compound, a malonate compound, an organoacrylate compound, a hindered amine compound, a hindered phenol compound, or a triazine compound.

The UV absorbing group is not limited as long as such a group can absorb UV light, and examples thereof include any residue of a benzotriazole compound, a hydroxybenzophenone compound, an ester compound of a substituted or unsubstituted benzoic acid or salicylic acid compound, an acrylate or alkoxy cinnamate compound, an oxamide compound, an oxanilide compound, a benzoxazinone compound, or a benzoxazole compound.

In a preferable embodiment, preferable examples of the radical capturing group or the UV absorbing group include

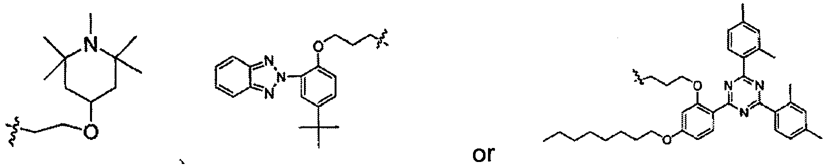

In the formula, R^{a} represents, each independently at each occurrence, -Z-CR¹ₚR²_{q}R³ᵣ.

In the formula, Z represents -R^{e}-Z'-.

R^{e} represents, each independently at each occurrence, a lower alkylene group. The lower alkylene group is preferably a C₁₋₂₀ alkylene group, more preferably a C₁₋₆ alkylene group, further preferably a C₁₋₃ alkylene group, particularly preferably methylene.

Z' represents, each independently at each occurrence, a single bond, an oxygen atom or a divalent organic group. Z' is preferably an oxygen atom or a divalent organic group, more preferably a divalent organic group, further preferably a C₁₋₆ alkylene group, - (CH₂)ⱼ-O-(CH₂)ₕ- (wherein j is an integer of 0 to 6, for example, an integer of 1 to 6, and h is an integer of 0 to 6, for example, an integer of 1 to 6), or -phenylene-(CH₂)ᵢ- (wherein i is an integer of 0 to 6), particularly preferably a C₁₋₆ alkylene group or -phenylene-(CH₂)ᵢ-, more preferably a C₁₋₆ alkylene group (preferably, a C₁₋₃ alkylene group). These groups are optionally substituted with, for example, one or more substituents selected from a fluorine atom, a C₁₋₆ alkyl group, a C₂₋₆ alkenyl group, and a C₂₋₆ alkynyl group. In a preferable embodiment, Z' is unsubstituted.

In a preferable embodiment, Z can be, each independently at each occurrence, a C₁₋₃ alkylene group, specifically -CH₂-, -CH₂CH₂-, or -CH₂CH₂CH₂-.

In the formulae, R¹ represents, each independently at each occurrence, R^{a'}. R^{a'} has the same meaning as R^{a}.

The number of C atoms linearly connected via the Z group in R^{a} is at most 5. That is, when at least one R¹ is present in R^{a}, the number of C atoms linearly connected via the Z group in R^{a} is 2 or more, and the number of C atoms linearly connected via the Z group is at most 5. Herein, "the number of C atoms linearly connected via the Z group in R^{a}" is equal to the number of repeating units of -Z-C- linearly connected in R^{a}.

One example where a C atom is, for example, connected via the Z group in R^{a} is shown below.

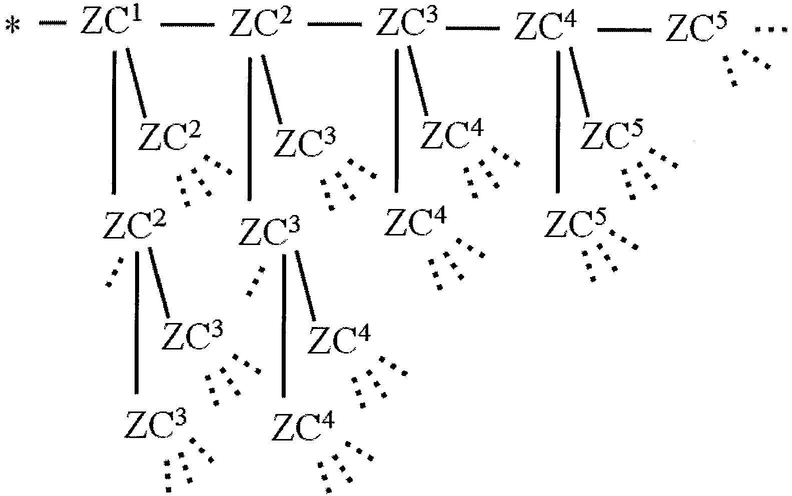

In the formula, "*" means a moiety bound to C of the main backbone, and "..." means that a predetermined group other than ZC is bound, namely, it means a point at which repeating of ZC is terminated when all three bonds of C atom correspond to "...". The superscript of C means the number of occurrences of C linearly linked via the Z group in counting with "*" as the origin. That is, a chain where ZC is repeated and terminated at C² means that the "number of C atoms linearly linked via the Z group in R^{a}" is 2, and, similarly, a chain where ZC is repeated and terminated at C³, C⁴ or C⁵ means that the "number of C atoms linearly linked via the Z group in R^{a}" is 3, 4 or 5, respectively. While a plurality of ZC chains are present in R^{a} as is clear from the above formula, all the chains do not necessarily have the same length, and may each have any length.

In a preferable embodiment, the "number of C atoms linearly linked via the Z group in R^{a}" is 1 (left formula) or 2 (right formula) in all chains, as described below.

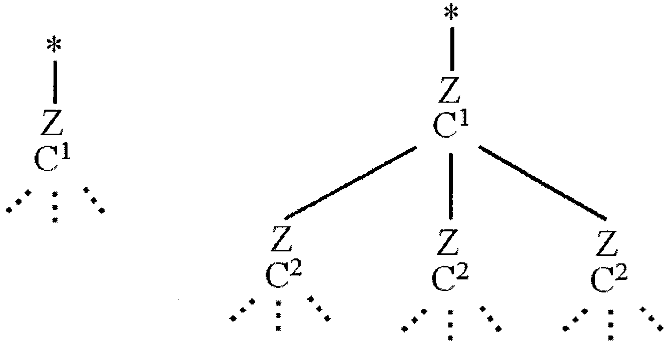

In one embodiment, the number of C atoms linearly linked via the Z group in R^{a} is 1 or 2, preferably 1.

In the formula, R² represents -R^{d}-Y-SiR⁵ₙR⁶₃₋ₙ.

R^{d} represents, each independently at each occurrence, a lower alkylene group. The lower alkylene group is preferably a C₁₋₂₀ alkylene group, more preferably a C₁₋₆ alkylene group, further preferably a C₁₋₃ alkylene group, particularly preferably methylene.

Y represents, each independently at each occurrence, a single bond, an oxygen atom or a divalent organic group.

In a preferable embodiment, Y is an oxygen bond or a divalent organic group. Y is more preferably a divalent organic group, particularly preferably a C₁₋₆ alkylene group, - (CH₂)_{g'}-O-(CH₂)_{h'}- (wherein g' is an integer of 0 to 6, for example, an integer of 1 to 6, and h' is an integer of 0 to 6, for example, an integer of 1 to 6), or -phenylene-(CH₂)_{i'}- (wherein i' is an integer of 0 to 6), further preferably a C₁₋₆ alkylene group or -phenylene-(CH₂)ᵢ-, particularly preferably a C₁₋₆ alkylene group (preferably, a C₁₋₃ alkylene group). These groups are optionally substituted with, for example, one or more substituents selected from a fluorine atom, a C₁₋₆ alkyl group, a C₂₋₆ alkenyl group, and a C₂₋₆ alkynyl group.

In one embodiment, Y may be a C₁₋₆ alkylene group, - O-(CH₂)_{h'}- or -phenylene-(CH₂)_{i'}-. When Y is the group, light resistance, particularly ultraviolet resistance can be higher.

In a preferable embodiment, -R^{d}-Y- may be a C₁₋₃ alkylene group, specifically -CH₂-, -CH₂CH₂-, or - CH₂CH₂CH₂-.

R⁵ represents, each independently at each occurrence, a hydroxyl group or a hydrolyzable group.

The "hydrolyzable group", as used herein, means a group that is able to undergo a hydrolysis reaction. Examples of the hydrolyzable group include -OR, -OCOR, - O-N=C(R)₂, -N(R)₂, -NHR and halogen (wherein R represents a substituted or unsubstituted alkyl group having 1 to 4 carbon atoms), and the hydrolyzable group is preferably - OR (alkoxy group). Examples of R include unsubstituted alkyl groups such as a methyl group, an ethyl group, a propyl group, an isopropyl group, a n-butyl group and an isobutyl group; and substituted alkyl groups such as a chloromethyl group. Among them, an alkyl group, in particular, an unsubstituted alkyl group is preferable, and a methyl group or an ethyl group is more preferable. The hydroxyl group is not limited, and, for example, may be generated by hydrolysis of the hydrolyzable group.

Preferably, R⁵ is -OR (wherein R represents a substituted or unsubstituted C₁₋₃ alkyl group, more preferably an ethyl group or a methyl group, particularly a methyl group).

R⁶ represents, each independently at each occurrence, a hydrogen atom or a lower alkyl group. The lower alkyl group is preferably an alkyl group having 1 to 20 carbon atoms, more preferably an alkyl group having 1 to 6 carbon atoms, further preferably a methyl group.

n is an integer of 1 to 3, preferably 2 or 3, more preferably 3, independently with respect to every (-R^{d}-Y-SiR⁵ₙR⁶₃₋ₙ) unit.

R³ represents, each independently at each occurrence, a hydrogen atom or a lower alkyl group. R³ is preferably a lower alkyl group. The lower alkyl group is preferably an alkyl group having 1 to 20 carbon atoms, more preferably an alkyl group having 1 to 6 carbon atoms, further preferably a methyl group.

In the formulae, p is, each independently at each occurrence, an integer of 0 to 3; q is, each independently at each occurrence, an integer of 0 to 3; and r is, each independently at each occurrence, an integer of 0 to 3, provided that the sum of p, q and r is 3.

In a preferable embodiment, q is, in R^{a'} (or R^{a} when R^{a'} is absent) at a terminal in R^{a}, preferably 2 or more, for example, 2 or 3, more preferably 3.

In a preferable embodiment, at least one terminal portion of R^{a} is -C(-R^{d}-Y-SiR⁵ₙR⁶₃₋ₙ)₂ or -C(-R^{d}-Y-SiR⁵ₙR⁶₃₋ₙ)₃, preferably -C(-R^{d}-Y-SiR⁵ₙR⁶₃₋ₙ)₃. In the formula, the (-R^{d}-Y-SiR⁵ₙR⁶₃₋ₙ) unit is preferably (-R^{d}-Y-SiR⁵₃). In a further preferable embodiment, all terminal portions of R^{a} is -C(-R^{d}-Y-SiR⁵ₙR⁶₃₋ₙ)₃, preferably -C(-R^{d}-Y-SiR⁵₃)₃.

In the formula, R^{b} represents, each independently at each occurrence, -R^{d}-Y-SiR⁵ₙR⁶₃₋ₙ. R^{d}, Y, R⁵, R⁶ and n have the same meaning as described with respect to R².

In the formulae, R^{c} represents, each independently at each occurrence, a hydrogen atom or a lower alkyl group. R^{c} is preferably a lower alkyl group. The lower alkyl group is preferably an alkyl group having 1 to 20 carbon atoms, more preferably an alkyl group having 1 to 6 carbon atoms, further preferably a methyl group.

In the formulae, k is, each independently at each occurrence, an integer of 0 to 3; 1 is, each independently at each occurrence, an integer of 0 to 3; m is, each independently at each occurrence, an integer of 0 to 3, provided that the sum of k, l and m is 3.

In one embodiment, at least one k is 2 or 3, preferably 3.

In one embodiment, k is 2 or 3, preferably 3.

In one embodiment, l is 2 or 3, preferably 3.

In a preferable embodiment, l is 3, and n is 3.

In the formulae (1a) and (1b), at least one q is 3, or at least one 1 is 3. That is, at least one -X-C(-R^{d}-Y-SiR⁵ₙR⁶₃₋ₙ)₃ group or -Z-C(-R^{d}-Y-SiR⁵ₙR⁶₃₋ₙ)₃ group is present in the formulae. The PFPE-containing silane compound of the present invention may have such a structure, thereby contributing to formation of a surface-treating layer having chemical durability (for example, being hardly degraded even under an acid and/or alkaline environment, more specifically an environment where sweat may be attached). The PFPE-containing silane compound of the present invention may have the above structure, thereby contributing to formation of a surface-treating layer favorable in friction durability, particularly contributing to formation of a surface-treating layer improved in frictional resistance even under an environment easily exposed to an acid and/or alkaline environment.

Any compounds represented by preferable formulae (1a) and (1b) are represented by the following (1a') and (1b'), respectively.

Rf-PFPE-X-CR^{a}ₖR^{b}ₗR^{c}ₘ ··· (1a')

R^{c}ₘR^{b}ₗR^{a}ₖC-X-PFPE-X-CR^{a}ₖR^{b}ₗR^{c}ₘ ··· (1b')

wherein:
Rf represents, each independently at each occurrence, an alkyl group having 1 to 16 carbon atoms, optionally substituted with one or more fluorine atoms;
PFPE represents, each independently at each occurrence, a group represented by formula: - (OC₆F₁₂)ₐ-(OC₅F₁₀)_{b}-(OC₄F₈)_{c}-(OC₃F₆)_{d}-(OC₂F₄)ₑ-(OCF₂)_{f}- (a, b, c, d, e and f have the same meaning as described above);
X represents, each independently at each occurrence, a single bond or a divalent organic group;
R^{a} represents, each independently at each occurrence, -Z-CR¹ₚR²_{q}R³ᵣ;
Z represents -R^{e}-Z'-;
R^{e} represents a lower alkylene group;
Z' represents a C₁₋₆ alkylene group or -phenylene-(CH₂)ᵢ-, preferably a C₁₋₃ alkylene group;
R¹ represents, each independently at each occurrence, R^{a'};
R^{a'} has the same meaning as R^{a};
the number of C atoms linearly linked via a -Z-group in R^{a} is at most 5;
R² represents, each independently at each occurrence, -R^{d}-Y-SiR⁵ₙR⁶₃₋ₙ;
R^{d} represents, each independently at each occurrence, a lower alkylene group;
Y represents a C₁₋₆ alkylene group or -phenylene-(CH₂)ᵢ-, more preferably a C₁₋₃ alkylene group;
R⁵ represents, each independently at each occurrence, a hydroxyl group or a hydrolyzable group;
R⁶ represents, each independently at each occurrence, a hydrogen atom or a lower alkyl group;
n is independently an integer of 1 to 3 with respect to every (-R^{d}-Y-SiR⁵ₙR⁶₃₋ₙ) unit, preferably 3;
R³ represents, each independently at each occurrence, a lower alkyl group;
p is, each independently at each occurrence, an integer of 0 to 3;
q is, each independently at each occurrence, an integer of 0 to 3;
r is, each independently at each occurrence, an integer of 0 to 3;
R^{b} represents, each independently at each occurrence, -R^{d}-Y-SiR⁵ₙR⁶₃₋ₙ;
R^{c} represents, each independently at each occurrence, a lower alkyl group;
k is, each independently at each occurrence, an integer of 0 to 3;
l is, each independently at each occurrence, an integer of 0 to 3;
m is, each independently at each occurrence, an integer of 0 to 3; and
the sum of k, l and m with respect to every (CR^{a}ₖR^{b}ₗR^{c}ₘ) is 3;
provided that any of q or l is 3 in the formulae.

In a preferable embodiment, the formulae (1a) and (1b) are represented by formulae (1a') and (1b'), respectively,
X represents, each independently at each occurrence, a single bond, or a divalent organic group having at least one selected from the group consisting of -C₆H₄-, - CONR⁴-, -CONR⁴-C₆H₄-, -C₆H₄-CONR⁴-, -CO-, -CO-C₆H₄-, -C₆H₄-CO-, -SO₂NR⁴-, -SO₂NR⁴-C₆H₄-, -C₆H₄-SO₂NR⁴-, -SO₂-, -SO₂-C₆H₄-, and -C₆H₄-SO₂-;
R⁴ represents, each independently at each occurrence, a hydrogen atom, a phenyl group, or a C₁₋₆ alkyl group;
-R^{d}-Y- is, each independently at each occurrence, a C₁₋₃ alkylene group, specifically -CH₂-, -CH₂CH₂-, or - CH₂CH₂CH₂-, and, for example, -CH₂CH₂CH₂-;
more preferably l is 2 or 3, particularly preferably l is 3; and
more preferably n is 3.

In the formulae (1a') and (1b'), more preferably
X is a divalent organic group represented by -CONR^{4'}-R^{52'}- (R^{4'} is a hydrogen atom or a methyl group, preferably a hydrogen atom; R^{52'} is a linear alkylene group having 1 to 6 carbon atoms, preferably 1 to 3 carbon atoms, and, for example, -CH₂-);
-R^{d}-Y- represents, each independently at each occurrence, a C₁₋₃ alkylene group, specifically -CH₂-, - CH₂CH₂-, or -CH₂CH₂CH₂-, and, for example, -CH₂CH₂CH₂-;
more preferably l is 2 or 3, particularly preferably l is 3; and
more preferably n is 3.

The PFPE-containing silane compound of the present invention represented by the formula (1a) or (1b) is not limited, and can have an average molecular weight of 5 × 10² to 1 × 10⁵. In particular, the PFPE-containing silane compound preferably has an average molecular weight of 2,000 to 32,000, more preferably 2,500 to 12,000, from the viewpoint of friction durability. In the present invention, the "average molecular weight" refers to a number average molecular weight, and the "average molecular weight" is defined as a value obtained by ¹⁹F-NMR measurement.

The PFPE-containing silane compound of the present invention, represented by the formula (1a) or formula (1b), preferably has a number average molecular weight of 4,000 to 10,000, preferably a number average molecular weight of 4,500 to 8,000, more preferably a number average molecular weight of 5,000 to 6,500.

In one embodiment, the compound represented by the formula (1a) or formula (1b) may have, for example, a number average molecular weight of 5 × 10² to 1 × 10⁵. Among the range, the compound particularly has a number average molecular weight of 1,000 to 32,000, more preferably 1,000 to 30,000, further preferably 1,000 to 12,000, particularly preferably 1,000 to 6,000.

In one embodiment, the compound represented by the formula (1a) or formula (1b) has a number average molecular weight of 1,000 to 8,000, preferably 1,000 to 4,000.

The PFPE-containing silane compound represented by the formula (1a) or formula (1b) is not limited, and may be produced by a combination of known methods.

For example, such a PFPE-containing compound which is represented by formula (1a) and which has -R⁵¹-CONH-R⁵²- as X is not limited, and may be produced as follows.

A compound having a double bond-containing group (preferably allyl) and an amino group (for example, H₂NR⁵²C(CH₂-CH=CH₂)₃) is allowed to react with R^{PFPE}-R⁵¹-COOCH₃, resulting in synthesis of R^{PFPE}-R⁵¹-CONH-R⁵²C(-CH₂-CH=CH₂)₃. The resulting compound is allowed to react with HSiCl₃ and alcohol or HC(OCH₃)₃, thereby providing a PFPE-containing compound R^{PFPE}-R⁵¹-CONH-R⁵²C(CH₂CH₂CH₂Si(OCH₃)₃)₃. R^{PFPE} described above means a PFPE-containing group, and R⁵¹ and R⁵² have the same meaning as described above.

The reaction conditions in production of the perfluoro(poly)ether group-containing silane compound of the present invention can be adjusted to appropriately preferable ranges by those skilled in the art.

### (Surface-treating agent)

Next, the surface-treating agent of the present invention will be described.

The surface-treating agent of the present invention contains at least one perfluoro(poly)ether group-containing silane compound represented by the formula (1a) or formula (1b).

The surface-treating agent of the present invention may impart water-repellency, oil-repellency, antifouling property, surface lubricity, and friction durability to a base material, is not limited, and is suitably used as an antifouling coating agent or a water-proof coating agent.

In one embodiment, the compound represented by the formula (1a) or formula (1b) included in the surface-treating agent of the present invention is a compound where X is a divalent organic group, and α and β are each 1.

In one embodiment, the compound represented by the formula (1a) or formula (1b) included in the surface-treating agent of the present invention is a compound where l is 3 and n is 3.

In one embodiment, the perfluoropolyether group-containing compound included in the surface-treating agent of the present invention is represented by the formula (1a).

The surface-treating agent of the present invention preferably includes 0.01 to 100 parts by mass, more preferably 0.1 to 30 parts by mass of the compound represented by the formula (1a) or formula (1b) based on 100 parts by mass of the surface-treating agent.

For example, the surface-treating agent of the present invention may be diluted with a solvent. Such a solvent is not limited, and examples thereof include:
any fluorine atom-containing solvent selected from the group consisting of perfluorohexane, CF₃CF₂CHCl₂, CF₃CH₂CF₂CH₃, CF₃CHFCHFC₂F₅, 1,1,1,2,2,3,3,4,4,5,5,6,6-tridecafluorooctane, 1,1,2,2,3,3,4-heptafluoro cyclopentane ((Zeorora H (trade name) and the like), C₄F₉OCH₃, C₄F₉OC₂H₅, CF₃CH₂OCF₂CHF₂, C₆F₁₃CH=CH₂, xylene hexafluoride, perfluorobenzene, methyl pentadecafluoroheptyl ketone, trifluoroethanol, pentafluoropropanol, hexafluoroisopropanol, HCF₂CF₂CH₂OH, methyl trifluoromethanesulfonate, trifluoroacetic acid and CF₃O(CF₂CF₂O)ₘ₁ (CF₂O)ₙ₁CF₂CF₃: wherein m1 and n1 are each independently an integer of 0 or more and 1000 or less, and the occurrence order of respective repeating units in parentheses with a symbol m1 or n1 is not limited in the formula, provided that the sum of m1 and n1 is 1 or more; 1,1-dichloro-2,3,3,3-tetrafluoro-1-propene, 1,2-dichloro-1,3,3,3-tetrafluoro-1-propene, 1,2-dichloro-3,3,3-trifluoro-1-propene, 1,1-dichloro-3,3,3-trifluoro-1-propene, 1,1,2-trichloro-3,3,3-trifluoro-1-propene, and 1,1,1,4,4,4-hexafluoro-2-butene.

The water content in the solvent is preferably 20 ppm or less in terms of the mass. The water content can be measured by use of the Karl Fischer method. The water content can be within the range, thereby resulting in an improvement in storage stability of the surface-treating agent.

The surface-treating agent may include other components than the compound represented by the formula (1a) or formula (1b). Such other components are not limited, and examples thereof include a (non-reactive) perfluoropolyether compound that may be understood as a fluorine-containing oil, preferably a perfluoro(poly)ether compound (hereinafter, referred to as "fluorine-containing oil"), a (non-reactive) silicone compound (hereinafter, referred to as "silicone oil") that may be understood as a silicone oil, and a catalyst.

Examples of such other components further include an alcohol, a transition metal, a halide ion, and a compound containing an atom having an unshared electron pair in a molecular structure.

The fluorine-containing oil is not limited, and examples thereof include a compound (perfluoro(poly)ether compound) represented by the following general formula (3) :

R²¹-(OC₄F₈)_{a'}-(OC₃F₆)_{b'}-(OC₂F₄)_{c'}-(OCF₂)_{d'}-R²² (3)

In the formula, R²¹ represents a C₁₋₁₆ alkyl group, optionally substituted with one or more fluorine atoms, preferably C₁₋₁₆ perfluoroalkyl group, R²² represents a C₁₋₁₆ alkyl group, optionally substituted with one or more fluorine atoms, preferably C₁₋₁₆ perfluoroalkyl group, a fluorine atom, or a hydrogen atom, and R²¹ and R²² more preferably each independently are a C₁₋₃ perfluoroalkyl group;
In the formula, a', b', c' and d' represent four types of the numbers of repeating units of perfluoro(poly)ether forming a main backbone of a polymer, respectively, and are, independently of each other, an integer of 0 or more and 300 or less, and the sum of a', b', c' and d' is at least 1, preferably 1 to 300, more preferably 20 to 300. The occurrence order of respective repeating units in parentheses with a suffix a', b', c' or d' is not limited in the formula. In these repeating units, -(OC₄F₈)- may be any of - (OCF₂CF₂CF₂CF₂)-, -(OCF(CF₃)CF₂CF₂)-, -(OCF₂CF(CF₃)CF₂)-, -(OCF₂CF₂CF(CF₃))-, -(OC(CF₃)₂CF₂)-, -(OCF₂C(CF₃)₂)-, - (OCF(CF₃)CF(CF₃))-, -(OCF(C₂F₅)CF₂)- and - (OCF₂CF(C₂F₅))-, and is preferably -(OCF₂CF₂CF₂CF₂)-; - (OC₃F₆)- may be any of -(OCF₂CF₂CF₂)-, -(OCF(CF₃)CF₂)- and -(OCF₂CF(CF₃))-, and is preferably -(OCF₂CF₂CF₂)-; and -(OC₂F₄)- may be any of -(OCF₂CF₂)- and -(OCF(CF₃))-, and is preferably -(OCF₂CF₂)-.

Examples of the perfluoro(poly)ether compound represented by the general formula (3) include a compound (for example, which may be a single compound or a combination of two or more kinds) represented by any of the following general formulae (3a) and (3b):

R²¹-(OCF₂CF₂CF₂)_{b''}-R²² (3a)

R²²-(OCF₂CF₂CF₂CF₂)_{a"}-(OCF₂CF₂CF₂)_{b''}-(OCF₂CF₂)_{c"}(OCF₂)_{d"}-R²² (3b)

In the formulae, R²¹ and R²² are as described above; b" is an integer of 1 or more and 100 or less in the formula (3a); and a" and b" are each independently an integer of 0 or more and 30 or less, and c" and d" are each independently an integer of 1 or more and 300 or less, in the formula (3b). The occurrence order of respective repeating units in parentheses with a suffix a", b", c", or d" is not limited in the formula.

In one embodiment, the compound represented by the formula (3b) is one or more compound represented by formula (3b) where the ratio of c" to d" (c"/d" ratio) is 0.2 or more and 2 or less.

For example, the fluorine-containing oil may have an average molecular weight of 1,000 to 30,000. Thus, high surface lubricity may be obtained.

The content of the fluorine-containing oil in the surface-treating agent of the present invention can be, for example, 0 to 500 parts by mass, preferably 0 to 400 parts by mass, more preferably 25 to 400 parts by mass based on 100 parts by mass in total of the PFPE-containing silane compound of the present invention (when two or more kinds of such oils are contained, the content means the total content of such oils, much the same is true on the following).

For example, the compound represented by the general formula (3a) and the compound represented by the general formula (3b) may be each used singly or in combinations of two or more kinds. The compound represented by the general formula (3b) is more preferably used than the compound represented by the general formula (3a) because higher surface lubricity is obtained. When the compound represented by the general formula (3a) and the compound represented by the general formula (3b) are used in a combination, the mass ratio thereof is preferably 1:1 to 1:30, more preferably 1:1 to 1:10. When the mass ratio is within the range, a surface-treating layer satisfying surface lubricity and friction durability in a well-balanced manner may be obtained.

In one embodiment, the fluorine-containing oil includes at least one compound represented by the general formula (3b). In such an embodiment, the mass ratio of the compound represented by the formula (1a) or formula (1b) and the compound represented by the formula (3b) in the surface-treating agent is preferably 10:1 to 1:10, further preferably 4:1 to 1:4.

In one preferable embodiment, the surface-treating agent of the present invention includes any compound represented by the formula (1a) or formula (1b) where PFPE is -(OCF₂CF₂CF₂)_{b}- (b is an integer of 1 to 200), and the compound represented by the formula (3b). Such a surface-treating agent may be used to form a surface-treating layer according to a wet coating method or a vacuum deposition method, preferably a vacuum deposition method, thereby imparting excellent surface lubricity and friction durability.

In one more preferable embodiment, the surface-treating agent of the present invention includes a compound where PFPE is represented by -(OC₄F₈)ₐ-(OC₃F₆)_{b}-(OC₂F₄)_{c}-(OCF₂)_{d}- (wherein a and b are each independently 0 or more and 30 or less, preferably an integer of 0 or more and 10 or less, c and d are each independently an integer of 1 or more and 200 or less, the sum of a, b, c and d is an integer of 10 or more and 200 or less, and the occurrence order of respective repeating units in parentheses with a suffix a, b, c or d is not limited in the formula), and the compound represented by the formula (3b). Such a surface-treating agent may be used to form a surface-treating layer according to a wet coating method or a vacuum deposition method, preferably vacuum deposition, thereby imparting more excellent surface lubricity and friction durability.

In these embodiments, the compound represented by the formula (3a) preferably has a number average molecular weight of 2,000 to 8,000.

In these embodiments, the compound represented by the formula (3b) preferably has a number average molecular weight of 2,000 to 30,000. The compound represented by the formula (3b) preferably has a number average molecular weight of 8,000 to 30,000 in the case of formation of a surface-treating layer according to a dry coating method, for example, a vacuum deposition method, and preferably has a number average molecular weight of 2,000 to 10,000, particularly 3,000 to 5,000 in the case of formation of a surface-treating layer according to a wet coating method, for example, a spray treatment.

In a preferable embodiment, in the case where a surface-treating layer is formed according to a vacuum deposition method, the average molecular weight of the fluorine-containing oil may be higher than the average molecular weight of the compound represented by the formula (1a) or formula (1b). For example, the number average molecular weight of the fluorine-containing oil may be higher than the number average molecular weight of the compound represented by the formula (1a) or formula (1b) by 2,000 or more, preferably 3,000 or more, more preferably 5,000 or more. The compound represented by the formula (1a) or formula (1b) and the fluorine-containing oil may each have such an average molecular weight to thereby impart more excellent surface lubricity and friction durability.

For example, the fluorine-containing oil may be a compound represented by general formula Rf'-F (wherein Rf' is a C₅₋₁₆ perfluoroalkyl group.) from another viewpoint. The compound represented by Rf'-F is preferable because such a compound has high affinity with any compound represented by the formula (1a) or formula (1b) where Rf is a C₁₋₁₆ perfluoroalkyl group.

The fluorine-containing oil contributes to an enhancement in surface lubricity of the surface-treating layer.

For example, a linear or cyclic silicone oil having 2,000 or less siloxane bonds may be used as the silicone oil. For example, the linear silicone oil may be any of so-called straight silicone oil and modified silicone oil. Examples of the straight silicone oil include dimethyl silicone oil, methyl phenyl silicone oil, and methyl hydrogen silicone oil. Examples of the modified silicone oil include straight silicone oil modified by alkyl, aralkyl, polyether, higher fatty acid ester, fluoroalkyl, amino, epoxy, carboxyl, alcohol, or the like. Examples of the cyclic silicone oil include cyclic dimethyl siloxane oil.

The content of such a silicone oil in the surface-treating agent of the present invention can be, for example, 0 to 300 parts by mass, preferably 50 to 200 parts by mass based on 100 parts by mass of the total of the PFPE-containing silane compound (when two or more kinds of such oils are contained, the content means the total content of such oils, much the same is true on the following).

The silicone oil contributes to an enhancement in surface lubricity of the surface-treating layer.

Examples of the catalyst include acids (for example, acetic acid and trifluoroacetic acid), bases (for example, ammonia, triethylamine, and diethylamine), and transition metals (for example, Ti, Ni, and Sn).

The catalyst promotes hydrolysis and dehydration condensation of the PFPE-containing silane compound, and promotes formation of the surface-treating layer.

Examples of the transition metals include platinum, ruthenium, and rhodium.

Examples of the halide ions include a chloride ion.

The compound containing an atom having an unshared electron pair in a molecular structure preferably contains at least one atom selected from the group consisting of a nitrogen atom, an oxygen atom, a phosphorus atom, and a sulfur atom, more preferably a sulfur atom or a nitrogen atom.

The compound containing an atom having an unshared electron pair in a molecular structure preferably contains at least one functional group selected from the group consisting of an amino group, an amide group, a sulfinyl group, a P=O group, a S=O group, and a sulfonyl group, more preferably at least one functional group selected from the group consisting of a P=O group, and a S=O group, in a molecular structure.

The compound containing an atom having an unshared electron pair in a molecular structure is preferably at least one compound selected from the group consisting of an aliphatic amine compound, an aromatic amine compound, an amide phosphate compound, an amide compound, a urea compound, and a sulfoxide compound, more preferably at least one compound selected from the group consisting of an aliphatic amine compound, an aromatic amine compound, amide phosphate, a urea compound, and a sulfoxide compound, particularly preferably at least one compound selected from the group consisting of a sulfoxide compound, an aliphatic amine compound and an aromatic amine compound, further preferably a sulfoxide compound.

Examples of the aliphatic amine compound may include diethylamine and triethylamine. Examples of the aromatic amine compound may include aniline and pyridine. Examples of the amide phosphate compound may include hexamethylphosphoramide. Examples of the amide compound may include N,N-diethylacetamide, N,N-diethylformamide, N,N-dimethylacetamide, N-methylformamide, N,N-dimethylformamide, and N-methylpyrrolidone. Examples of the urea compound may include tetramethylurea. Examples of the sulfoxide compound may include dimethylsulfoxide (DMSO), tetramethylenesulfoxide, methylphenylsulfoxide, and diphenylsulfoxide. Among these compounds, dimethylsulfoxide or tetramethylenesulfoxide is preferably used.

Examples of any component other than the above also include tetraethoxysilane, methyltrimethoxysilane, 3-aminopropyltrimethoxysilane, 3-glycidoxypropyltrimethoxysilane, and methyltriacetoxysilane.

Examples of any component other than the above include an alcohol compound having 1 to 6 carbon atoms.

### (Pellet)

The surface-treating agent of the present invention can be used for impregnation of a porous material such as a porous ceramic material, or a metal fiber such as a steel wool compressed to a cotton-like form, thereby providing a pellet. The pellet can be used in, for example, vacuum deposition.

### (Article)

Next, the article of the present invention will be described.

The article of the present invention includes a base material, and a layer (surface-treating layer) formed from the PFPE-containing silane compound or the surface-treating agent of the present invention (hereinafter, representatively simply referred to as "the surface-treating agent of the present invention"), on a surface of the base material. The article may be produced as follows, for example.

First, a base material is prepared. For example, the base material usable in the present invention may be formed from, for example, any suitable material such as glass, a resin (for example, which may be a natural or synthetic resin such as a general plastic material, and may be in the form of a plate, a film or the like), a metal (for example, which may be a metal itself, such as aluminum, copper, or iron, or a composite such as an alloy), ceramics, a semiconductor (silicon, germanium, or the like), a fiber (woven fabric, unwoven cloth, or the like), fur, leather, a wood material, a pottery, a stone material, or a building component.

For example, when the article to be produced is an optical member, for example, the material composing the surface of the base material may be a material for optical members, such as glass or transparent plastic. When the article to be produced is an optical member, for example, any layer (or film) such as a hard coating layer or an antireflection layer may be formed on the surface (outermost layer) of the base material. Any of a monolayer antireflection layer and a multilayer antireflection layer may be used for the antireflection layer. Examples of an inorganic substance usable for the antireflection layer include SiO₂, SiO, ZrO₂, TiO₂, TiO, Ti₂O₃, Ti₂O₅, Al₂O₃, Ta₂O₅, CeO₂, MgO, Y₂O₃, SnO₂, MgF₂, and WO₃. Such inorganic substances may be used singly or in combinations (for example, as a mixture) of two or more kinds thereof. When a multilayer antireflection layer is used, SiO₂ and/or SiO are/is preferably used for the outermost layer. When the article to be produced is an optical glass component for a touch panel, the article may have a transparent electrode, for example, a thin film using indium tin oxide (ITO), indium zinc oxide, or the like, on a part of the surface of the base material (glass). The base material may have an insulating layer, an adhesive layer, a protecting layer, a decorated frame layer (I-CON), a sprayed film layer, a hard coating layer, a polarizing film, a phase difference film, and a liquid crystal display module, depending on the specific specifications.

The shape of the base material is not limited. A surface region of the base material, on which the surface-treating layer is to be formed, may be at least a part of the surface of the base material, and can be appropriately determined depending on the intended use, the specific specifications, and the like of the article to be produced.

For example, at least the surface portion of such a base material may be made of a material originally having a hydroxyl group. Examples of such a material include glass, and also include a metal (in particular, base metal), ceramics, and a semiconductor, on which a natural oxidized film or a thermal oxidized film is formed. Alternatively, when the material is a material having a hydroxyl group, but not sufficiently having such a group, or a material not originally having any hydroxyl group, as in a resin or the like, any pre-treatment of the base material can be conducted to thereby introduce a hydroxyl group onto the surface of the base material or increase the amount of a hydroxyl group on the surface. Examples of such a pre-treatment include a plasma treatment (for example, corona discharge) and ion beam irradiation. A plasma treatment can be suitably utilized in order to not only introduce a hydroxyl group onto the surface of the base material or increase the amount of a hydroxyl group on the surface, but also clean the surface of the base material (remove foreign substances or the like). Other examples of such a pre-treatment include a method where a monomolecular film of a surface adsorbent having a carbon-carbon unsaturated bond group is previously formed on the surface of the base material by a LB method (Langmuir-Blodgett method) or a chemical adsorption method and thereafter the unsaturated bond is cleaved under an atmosphere containing oxygen, nitrogen, and the like.

Alternatively, such a base material may have a surface portion made of a material containing a silicone compound having other reactive group(s) such as Si-H group(s) or containing alkoxysilane.

Next, a film of the surface-treating agent of the present invention is formed on the surface of such a base material, and is, if necessary, subjected to a post-treatment, and thus the surface-treating layer is formed from the surface-treating agent of the present invention.

The film of the surface-treating agent of the present invention can be formed by applying the surface-treating agent onto the surface of the base material so that the surface is coated. The coating method is not limited. For example, a wet coating method and a dry coating method can be used.

Examples of the wet coating method include dip coating, spin coating, flow coating, spray coating, roll coating, gravure coating, and a similar method.

Examples of the dry coating method include deposition (usually vacuum deposition), sputtering, CVD, and a similar method. Specific examples of a deposition method (usually vacuum deposition method) include resistance heating, electron beam, high-frequency heating using microwave or the like, ion beam, and a similar method. Specific examples of a CVD method include plasma-CVD, optical CVD, thermal CVD, and a similar method.

Furthermore, coating by an atmospheric pressure plasma method can also be made.

When the wet coating method is used, the surface-treating agent of the present invention can be diluted with a solvent and then applied to the surface of the base material. The following solvents are preferably used from the viewpoints of stability of the surface-treating agent of the present invention and volatility of such a solvent: perfluoroaliphatic hydrocarbons having 5 to 12 carbon atoms (for example, perfluorohexane, perfluoromethyl cyclohexane, and perfluoro-1,3-dimethyl cyclohexane); polyfluoroaromatic hydrocarbons (for example, bis(trifluoromethyl)benzene); polyfluoroaliphatic hydrocarbons (for example, C₆F₁₃CH₂CH₃ (for example, Asahiklin (registered trademark) AC-6000 manufactured by Asahi Glass Co., Ltd.) and 1,1,2,2,3,3,4-heptafluoro cyclopentane (for example, Zeorora (registered trademark) H manufactured by Nippon Zeon Co., Ltd.); alkyl perfluoroalkyl ethers (perfluoroalkyl group and alkyl group may be linear or branched) such as hydrofluoroethers (HFE) (for example, perfluoropropyl methyl ether (C₃F₇OCH₃) (for example, Novec (trademark) 7000 manufactured by Sumitomo 3M Ltd.), perfluorobutylmethyl ether (C₄F₉OCH₃) (for example, Novec (trademark) 7100 manufactured by Sumitomo 3M Ltd.), perfluorobutylethyl ether (C₄F₉OC₂H₅) (for example, Novec (trademark) 7200 manufactured by Sumitomo 3M Ltd.), and perfluorohexyl methyl ether (C₂F₅CF (OCH₃)C₃F₇) (for example, Novec (trademark) 7300 manufactured by Sumitomo 3M Ltd.), or CF₃CH₂OCF₂CHF₂ (for example, Asahiklin (registered trademark) AE-3000) manufactured by Asahi Glass Co., Ltd.). Such solvents may be used singly or as a mixture of two or more kinds combined. Among them, hydrofluoroether is preferable, perfluorobutyl methyl ether (C₄F₉OCH₃) and/or perfluorobutyl ethyl ether (C₄F₉OC₂H₅) are/is particularly preferable.

When the dry coating method is used, for example, the surface-treating agent of the present invention may be subjected, as it is, to the dry coating method, or may be diluted with the solvent and then subjected to the dry coating method.

Film formation is preferably performed so that the surface-treating agent of the present invention coexists with a catalyst for hydrolysis and dehydration condensation in the film. Briefly, in the case of the wet coating method, for example, the surface-treating agent of the present invention may be diluted with the solvent and thereafter the catalyst may be added to a diluted liquid of the surface-treating agent of the present invention immediately before application to the surface of the base material. In the case of the dry coating method, for example, the surface-treating agent of the present invention, to which the catalyst is added, may be subjected, as it is, to a deposition (usually vacuum deposition) treatment, or a metal porous material such as iron or copper impregnated with the surface-treating agent of the present invention, to which the catalyst is added, in the form of a pellet, may be subjected to a deposition (usually vacuum deposition) treatment.

Any proper acid or base can be used for the catalyst. For example, acetic acid, formic acid, or trifluoroacetic acid can be used as an acid catalyst. For example, ammonia or an organic amine compound can be used as a base catalyst.

Next, the film is subjected to a post-treatment, if necessary. The post-treatment is not limited, and for example, may be performed by sequentially feeding a water content, and performing drying and heating, and more specifically may be performed as follows.

After the film of the surface-treating agent of the present invention is formed on the surface of the base material as described above (hereinafter, also referred to as "precursor film"), a water is fed to the film. The method of feeding a water is not limited, and for example, a method such as dew condensation due to the temperature difference between the precursor film (and base material) and the surrounding atmosphere, or blowing steam may be used.

It is considered that a water can be fed to a precursor film to thereby allow water to act on a hydrolyzable group bound to Si of the perfluoro(poly)ether group-containing silane compound in the surface-treating agent of the present invention, resulting in rapid hydrolysis of the compound.

A water can be fed under an atmosphere at, for example, 0 to 250°C, preferably 60°C or more, further preferably 100°C or more, and preferably 180°C or less, further preferably 150°C or less. A water can be fed in such a temperature range, thereby allowing for progression of hydrolysis. The pressure here is not limited, and can be simply ambient pressure.

Next, the precursor film is heated on the surface of the base material under a dry atmosphere at more than 60°C. The drying and heating method is not limited, and for example, the precursor film together with the base material may be disposed under an atmosphere at a temperature of more than 60°C, preferably more than 100°C, and for example, 250°C or less, preferably 180°C or less, and at an unsaturated vapor pressure. The pressure here is not limited, and may be simply ambient pressure.

Under such an atmosphere, groups bound to Si after hydrolysis (when all R¹ is a hydroxyl group in the compound represented by any of the formula (1a) or formula (1b), such hydroxyl groups are applied, much the same is true on the following) are mutually rapidly dehydrated and condensed in the PFPE-containing silane compound of the present invention. A group bound to Si after hydrolysis of the compound and a reactive group present in the surface of the base material are rapidly reacted between the compound and the base material, and are dehydrated and condensed when the reactive group present in the surface of the base material is a hydroxyl group. As a result, binding in the PFPE-containing silane compound of the present invention is formed, and binding between the compound and the base material is also formed.

For example, the feeding of a water, and the drying and heating may be continuously performed by use of superheated steam.

The superheated steam is any gas which is obtained by heating saturated water vapor at a temperature higher than the boiling point and which become to have an unsaturated vapor pressure by heating at a temperature of more than 100°C and generally 250°C or less, for example, 180°C or less and higher than the boiling point, under an ambient pressure. The base material on which the precursor film is formed is exposed to the superheated steam, first resulting in dew condensation on the surface of the precursor film due to the temperature difference between the superheated steam and the precursor film at a relatively low temperature, thereby allowing a water to be fed to the precursor film. The water on the surface of the precursor film is gasified with time in a dry atmosphere with the superheated steam according to a decrease in the temperature difference between the superheated steam and the precursor film, resulting in a gradual decrease in the amount of the water on the surface of the precursor film. While the amount of the water on the surface of the precursor film is decreased, namely, the precursor film is in a dry atmosphere, the precursor film on the surface of the base material is brought into contact with the superheated steam and thus heated to a temperature (temperature of more than 100°C at ambient pressure) of the superheated steam. Accordingly, the superheated steam may be used to thereby allow feeding of the water and heating with drying to be continuously performed only by exposure of the base material on which the precursor film is formed, to the superheated steam.

The post-treatment can be performed as described above. Such a post-treatment can be performed in order to further improve friction durability, but it is to be noted that such a post-treatment is not essential for production of the article of the present invention. For example, the surface-treating agent of the present invention may also be applied to the surface of the base material and then left to stand as it is.

As described above, the surface-treating layer derived from the film of the surface-treating agent of the present invention is formed on the surface of the base material, and the article of the present invention is produced. The surface-treating layer thus obtained has both high surface lubricity and high friction durability. The surface-treating layer can have not only high friction durability, but also water-repellency, oil-repellency, antifouling property (for example, prevention of attachment of contaminations such as fingerprints), waterproof property (prevention of ingress of water into electronic components and the like), surface lubricity (or lubricity, for example, wiping property of contaminations such as fingerprints, or excellent texture to fingers), and the like, depending on the composition of a surface-treating agent to be used, and can be suitably utilized as a functional thin film.

That is, the present invention also relates to an optical material including the cured product on the outermost layer.

Examples of the optical material preferably include not only optical materials related to a display and the like recited below, but also various optical materials: for example, displays such as a cathode ray tube (CRT; e.g., personal computer monitor), a liquid crystal display, a plasma display, an organic EL display, an inorganic thin-film EL dot matrix display, a rear projection display, a vacuum fluorescent display (VFD), and a field emission display (FED; Field Emission Display), and protective plates of such displays, or such protective plates each provided with a surface onto which an antireflection film is applied.

An article including the surface-treating layer obtained by the present invention is not limited, and can be an optical member. Examples of the optical member include the following: lenses for eyeglasses; a front surface protective plate, an antireflection plate, a polarizing plate, and an anti-glare plate for displays such as PDP and LCD; a touch panel sheet for devices such as a cellular phone and a personal digital assistance; a disc surface for optical discs such as a Blu-ray (registered trademark) disc, a DVD disc, CD-R, and MO; an optical fiber; and a display surface of a clock.

For example, the article including the surface-treating layer obtained by the present invention may be medical equipment or a medical material.

The thickness of the surface-treating layer is not limited. In the case of an optical member, the thickness of the surface-treating layer is in the range from 1 to 50 nm, from 1 to 30 nm, and preferably from 1 to 15 nm from the viewpoints of optical performance, surface lubricity, friction durability, and antifouling property.

The article obtained by use of the surface-treating agent of the present invention is as described above in detail. The application, the usage method, and the production method of the article of the surface-treating agent of the present invention are not limited to those recited above.

### Examples

The surface-treating agent of the present invention will be more specifically described with reference to the following Examples, but the present invention is not intended to be limited to these Examples. In the present Examples, the occurrence order of repeating units (CF₂O) and (CF₂CF₂O) constituting perfluoropolyether is not here limited.

### (Synthesis Example 1)

A 50-mL four-necked flask equipped with a reflux condenser, a thermometer and a stirrer was charged with 5.8 g of a perfluoropolyether-modified methyl ester compound represented by an average compositional formula CF₃O(CF₂CF₂O)₂₀(CF₂O)₁₆CF₂COOCH₃, 6 ml of 1,3-bis(trifluoromethyl)benzene and 0.5 g of NH₂CH₂C(CH₂CH=CH₂)₃, and the mixture was stirred at room temperature under a nitrogen stream for 6 hours. Subsequently, 10 ml of perfluorohexane and 10 ml of acetone were added thereto, the resultant was stirred for 30 minutes, and thereafter a perfluorohexane phase was collected by separation with a separating funnel. Thereafter, the perfluorohexane phase collected by separation was subjected to filtration and subsequently the volatile content was distilled off under reduced pressure, thereby providing 5.2 g of perfluoropolyether group-containing allyl compound (A) having an allyl group at a terminal, represented by the following formula.
- Perfluoropolyether group-containing allyl compound (A): CF₃O(CF₂CF₂O)₂₀(CF₂O)₁₆CF₂CONHCH₂C(CH₂CH=CH₂)₃

### (Synthesis Example 2)

A 50-mL four-necked flask equipped with a reflux condenser, a thermometer and a stirrer was charged with 4.0 g of perfluoropolyether group-containing allyl compound (A) having an allyl group at a terminal, synthesized in Synthesis Example 1, 6 ml of 1,3-bis(trifluoromethyl)benzene and 0.88 g of trichlorosilane, and the mixture was stirred at 5°C under a nitrogen stream for 30 minutes. Subsequently, 0.09 ml of a solution containing 2% of a Pt complex of 1,3-divinyl-1,1,3,3-tetramethyldisiloxane in xylene was added thereto, and thereafter the resultant was heated to 60°C, and stirred at that temperature for 4 hours. Thereafter, the volatile content was distilled off under reduced pressure. Subsequently, 5 ml of 1,3-bis(trifluoromethyl)benzene was added thereto, the resultant was stirred at 55°C for 10 minutes, thereafter a mixed solution of 0.13 g of methanol and 4.24 g of trimethyl orthoformate was added thereto, and the resultant was stirred at that temperature for 2 hours. Thereafter, the volatile content was distilled off under reduced pressure, thereby providing 4.1 g of the following perfluoropolyether group-containing compound (B) having a trimethylsilyl group at a terminal.
- Perfluoropolyether group-containing compound (B) CF₃O(CF₂CF₂O)₂₀(CF₂O)₁₆CF₂CONHCH₂C[CH₂CH₂CH₂Si(OCH₃)₃]₃

### (Synthesis Example 3)

A 50-mL four-necked flask equipped with a reflux condenser, a thermometer and a stirrer was charged with 8.8 g of a perfluoropolyether-modified methyl ester compound represented by an average compositional formula CF₃O(CF₂CF₂O)₁₉(CF₂O)₂₈CF₂COOCH₃, 5 ml of 1,3-bis(trifluoromethyl)benzene and 0.9 g of

NH₂CH₂C(CH₂CH=CH₂)₃, and the mixture was stirred at room temperature under a nitrogen stream for 6 hours. Subsequently, 10 ml of perfluorohexane and 10 ml of acetone were added thereto, the resultant was stirred for 30 minutes, and thereafter a perfluorohexane phase was collected by separation with a separating funnel. Thereafter, the perfluorohexane phase collected by separation was subjected to filtration and subsequently the volatile content was distilled off under reduced pressure, thereby providing 8.5 g of perfluoropolyether group-containing allyl compound (C) having an allyl group at a terminal, represented by the following formula.
- Perfluoropolyether group-containing allyl compound (C): CF₃O(CF₂CF₂O)₁₉(CF₂O)₂₈CF₂CONHCH₂C(CH₂CH=CH₂)₃

### (Synthesis Example 4)

A 50-mL four-necked flask equipped with a reflux condenser, a thermometer and a stirrer was charged with 6.0 g of perfluoropolyether group-containing allyl compound (C) having an allyl group at a terminal, synthesized in Synthesis Example 3, 6 ml of 1,3-bis(trifluoromethyl)benzene and 1.20 g of trichlorosilane, and the mixture was stirred at 5°C under a nitrogen stream for 30 minutes. Subsequently, 0.09 ml of a solution containing 2% of a Pt complex of 1,3-divinyl-1,1,3,3-tetramethyldisiloxane in xylene was added thereto, and thereafter the resultant was heated to 60°C, and stirred at that temperature for 4 hours. Thereafter, the volatile content was distilled off under reduced pressure. Subsequently, 6 ml of 1,3-bis(trifluoromethyl)benzene was added thereto, the resultant was stirred at 55°C for 10 minutes, thereafter a mixed solution of 0.20 g of methanol and 6.70 g of trimethyl orthoformate was added thereto, and the resultant was stirred at that temperature for 2 hours. Thereafter, the volatile content was distilled off under reduced pressure, thereby providing 5.9 g of the following perfluoropolyether group-containing silane compound (D) having a trimethylsilyl group at a terminal.
- Perfluoropolyether group-containing silane compound (D): (e/f ratio: 0.68)
   CF₃O(CF₂CF₂O)₁₉(CF₂O)₂₈CF₂CONHCH₂C[CH₂CH₂CH₂Si(OCH₃)₃]₃

### (Synthesis Example 5)

A 100-mL four-necked flask equipped with a reflux condenser, a thermometer and a stirrer was charged with 12.5 g of a perfluoropolyether-modified methyl ester compound represented by an average compositional formula CF₃CF₂CF₂O(CF₂CF₂CF₂O)₃₀CF₂CF₂COOCH₃, 10 ml of 1,3-bis(trifluoromethyl)benzene and 1.1 g of NH₂CH₂C(CH₂CH=CH₂)₃, and the mixture was stirred at room temperature under a nitrogen stream for 6 hours. Subsequently, 20 ml of perfluorohexane and 20 ml of acetone were added thereto, the resultant was stirred for 30 minutes, and thereafter a perfluorohexane phase was collected by separation with a separating funnel. Thereafter, the perfluorohexane phase collected by separation was subjected to filtration and subsequently the volatile content was distilled off under reduced pressure, thereby providing 12.1 g of perfluoropolyether group-containing allyl compound (E) having an allyl group at a terminal, represented by the following formula.
- Perfluoropolyether group-containing allyl compound (E): CF₃CF₂CF₂O(CF₂CF₂CF₂O)₃₀CF₂CF₂CONHCH₂C(CH₂CH=CH₂)₃

### (Synthesis Example 6)

A 50-mL four-necked flask equipped with a reflux condenser, a thermometer and a stirrer was charged with 5.0 g of perfluoropolyether group-containing allyl compound (E) having an allyl group at a terminal, synthesized in Synthesis Example 5, 8 ml of 1,3-bis(trifluoromethyl)benzene and 1.10 g of trichlorosilane, and the mixture was stirred at 5°C under a nitrogen stream for 30 minutes. Subsequently, 0.11 ml of a solution containing 2% of a Pt complex of 1,3-divinyl-1,1,3,3-tetramethyldisiloxane in xylene was added thereto, and thereafter the resultant was heated to 60°C, and stirred at that temperature for 4 hours. Thereafter, the volatile content was distilled off under reduced pressure. Subsequently, 8 ml of 1,3-bis(trifluoromethyl)benzene was added thereto, the resultant was stirred at 55°C for 10 minutes, thereafter a mixed solution of 0.16 g of methanol and 5.36 g of trimethyl orthoformate was added thereto, and the resultant was stirred at that temperature for 2 hours. Thereafter, the volatile content was distilled off under reduced pressure, thereby providing 5.1 g of the following perfluoropolyether group-containing compound (F) having a trimethylsilyl group at a terminal.
- Perfluoropolyether group-containing compound (F): CF₃CF₂CF₂O(CF₂CF₂CF₂O)₃₀CF₂CF₂CONHCH₂C[CH₂CH₂CH₂Si(OCH₃)₃]₃

### (Synthesis Example 7)

A 200-mL four-necked flask equipped with a reflux condenser, a thermometer and a stirrer was charged with 32 g of a perfluoropolyether-modified carboxylic acid compound represented by an average compositional formula CF₃CF₂CF₂O[CF(CF₃)CF₂O]₂₂CF(CF₃)COOH, 16 g of 1,3-bis(trifluoromethyl)benzene, 0.13 g of N,N-dimethylformamide and 2.17 g of thionyl chloride, and the mixture was stirred at 90°C under a nitrogen stream for 1 hour. Subsequently, the volatile content was distilled off under reduced pressure, thereafter 16 g of 1,3-bis(trifluoromethyl)benzene, 1.35 g of triethylamine and 1.73 g of NH₂CH₂C(CH₂CH=CH₂)₃ were loaded, and the mixture was stirred at room temperature under a nitrogen stream for 6 hours. Subsequently, 30 g of perfluorohexane, 10 g of acetone and 20 g of 3 mol/L hydrochloric acid were added thereto, the resultant was stirred for 30 minutes, and thereafter a perfluorohexane phase was collected by separation with a separating funnel. Thereafter, the perfluorohexane phase collected by separation was subjected to filtration and subsequently the volatile content was distilled off under reduced pressure, thereby providing 29.6 g of perfluoropolyether group-containing allyl compound (G) having an allyl group at a terminal, represented by the following formula.
• Perfluoropolyether group-containing allyl compound (G): CF₃CF₂CF₂O[CF(CF₃)CF₂O]₂₂CF(CF₃)CONHCH₂C(CH₂CH=CH₂)₃

### (Synthesis Example 8)

A 200-mL four-necked flask equipped with a reflux condenser, a thermometer and a stirrer was charged with 29 g of perfluoropolyether group-containing allyl compound (G) having an allyl group at a terminal, synthesized in Synthesis Example 7, 35 ml of 1,3-bis(trifluoromethyl)benzene and 6.7 g of trichlorosilane, and the mixture was stirred at 5°C under a nitrogen stream for 30 minutes. Subsequently, 0.3 ml of a solution containing 2% of a Pt complex of 1,3-divinyl-1,1,3,3-tetramethyldisiloxane in xylene was added thereto, and thereafter the resultant was heated to 60°C, and stirred at that temperature for 6 hours. Thereafter, the volatile content was distilled off under reduced pressure. Subsequently, 30 ml of 1,3-bis(trifluoromethyl)benzene was added thereto, the resultant was stirred at 55°C for 10 minutes, thereafter a mixed solution of 0.73 g of methanol and 16.8 g of trimethyl orthoformate was added thereto, and the resultant was stirred at that temperature for 2 hours. Thereafter, the volatile content was distilled off under reduced pressure, thereby providing 30.1 g of the following perfluoropolyether group-containing compound (H) having a trimethylsilyl group at a terminal.
- Perfluoropolyether group-containing silane compound (H) :
   CF₃CF₂CF₂O[CF(CF₃)CF₂O]₂₂CF(CF₃)CONHCH₂C[CH₂CH₂CH₂Si(OCH₃)₃]₃

### (Synthesis Example 9)

A 200-mL four-necked flask equipped with a reflux condenser, a thermometer and a stirrer was charged with 32 g of a perfluoropolyether-modified carboxylic acid compound represented by an average compositional formula CF₃CF₂CF₂O[CF(CF₃)CF₂O]₂₆CF(CF₃)COOH, 16 g of 1,3-bis(trifluoromethyl)benzene, 0.10 g of N,N-dimethylformamide and 1.69 g of thionyl chloride, and the mixture was stirred at 90°C under a nitrogen stream for 1 hour. Subsequently, the volatile content was distilled off under reduced pressure, thereafter 16 g of 1,3-bis(trifluoromethyl)benzene, 1.05 g of triethylamine and 1.36 g of NH₂CH₂C(CH₂CH=CH₂)₃ were loaded, and the mixture was stirred at room temperature under a nitrogen stream for 6 hours. Subsequently, 30 g of perfluorohexane, 10 g of acetone and 20 g of 3 mol/L hydrochloric acid were added thereto, the resultant was stirred for 30 minutes, and thereafter a perfluorohexane phase was collected by separation with a separating funnel. Thereafter, the perfluorohexane phase collected by separation was subjected to filtration and subsequently the volatile content was distilled off under reduced pressure, thereby providing 29.2 g of perfluoropolyether group-containing allyl compound (I) having an allyl group at a terminal, represented by the following formula.
- Perfluoropolyether group-containing allyl compound (I): CF₃CF₂CF₂O[CF(CF₃)CF₂O]₂₈CF(CF₃)CONHCH₂C(CH₂CH=CH₂)₃

### (Synthesis Example 10)

A 200-mL four-necked flask equipped with a reflux condenser, a thermometer and a stirrer was charged with 29 g of perfluoropolyether group-containing allyl compound (I) having an allyl group at a terminal, synthesized in Synthesis Example 9, 35 ml of 1,3-bis(trifluoromethyl)benzene and 5.2 g of trichlorosilane, and the mixture was stirred at 5°C under a nitrogen stream for 30 minutes. Subsequently, 0.23 ml of a solution containing 2% of a Pt complex of 1,3-divinyl-1,1,3,3-tetramethyldisiloxane in xylene was added thereto, and thereafter the resultant was heated to 60°C, and stirred at that temperature for 6 hours. Thereafter, the volatile content was distilled off under reduced pressure. Subsequently, 30 ml of 1,3-bis(trifluoromethyl)benzene was added thereto, the resultant was stirred at 55°C for 10 minutes, thereafter a mixed solution of 0.57 g of methanol and 13.1 g of trimethyl orthoformate was added thereto, and the resultant was stirred at that temperature for 2 hours. Thereafter, the volatile content was distilled off under reduced pressure, thereby providing 29.6 g of the following perfluoropolyether group-containing compound (J) having a trimethylsilyl group at a terminal.
- Perfluoropolyether group-containing compound (J): CF₃CF₂CF₂O[CF(CF₃)CF₂O]₂₈CF(CF₃)CONHCH₂C[CH₂CH₂CH₂Si(OCH₃)₃]₃

### (Example 1)

Compound (B) obtained in Synthesis Example 2 was dissolved in hydrofluoroether (NOVEC HFE 7200 manufactured by 3M) so that the concentration was 20% by weight, thereby preparing surface-treating agent 1.

### (Examples 2 to 3)

Each surface-treating agent was prepared in the same manner as in Example 1 except that compound (D) obtained in Synthesis Example 4 or compound (F) obtained in Synthesis Example 6 was used instead of compound (B).

### (Examples 4 to 5)

Each surface-treating agent was prepared in the same manner as in Example 1 except that compound (H) obtained in Synthesis Example 8 or compound (J) obtained in Synthesis Example 10 was used instead of compound (B).

### (Comparative Example 1)

A surface-treating agent was prepared in the same manner as in Example 1 except that the following control compound 1 was used instead of compound (B).
- Control compound 1
   CF₃O(CF₂CF₂O)₂₀(CF₂O)₁₆CF₂C[OSi(CH₃)₃][CH₂CH₂CH₂Si(OCH₃)₃]₂

### <Evaluation of friction durability>

Each of the surface-treating agents prepared in Examples 1 to 5 and Comparative Example 1 was vacuum-deposited on chemically reinforced glass ("Gorilla" glass having a thickness of 0.7 mm, manufactured by Corning Incorporated). Such a vacuum deposition treatment was at a pressure of 3.0 × 10⁻³ Pa. A silicon dioxide film of 5 nm was formed on the surface of the chemically reinforced glass, and subsequently 4 mg of a surface-treating agent (namely, containing 0.8 mg of compound (B), compound (D), compound (F), compound (H), compound (J) or control compound 1) per the chemically reinforced glass (55 mm × 100 mm) was deposited. Next, the chemically reinforced glass with a deposited film was left to still stand under an atmosphere of a temperature of 150°C for 30 minutes, and thereafter cooled to room temperature, thereby forming a surface-treating layer.

Each of the surface-treating layers obtained was subjected to a friction durability test with the following friction block, as the evaluation of durability in practical use.

A silicone gum shown below, the surface (diameter: 1 cm) of which was covered with a cotton impregnated with artificial sweat having the following composition, was used as a friction block.

### • Composition of artificial sweat

Anhydrous disodium hydrogen phosphate: 2 g
Sodium chloride: 20 g 85% Lactic acid: 2 g
Histidine hydrochloride: 5 g
Distilled water: 1 kg

### • Silicone gum

Silicone rubber plug SR-51 manufactured by Tigers Polymer Corporation, processed into a cylinder shape having a diameter of 1 cm and a thickness of 1 cm.

The evaluation of durability in practical use was performed by, specifically, horizontally disposing a sample article on which each of the surface-treating layers was formed, bringing the friction block into contact with the surface of each of the surface-treating layers (the contact surface had a circular shape having a diameter of 1 cm), applying a load of 5 N thereonto, and thereafter allowing the friction block to reciprocate at a rate of 40 mm/sec with the load being applied. The static contact angle (degrees) of water with each of the surface-treating layers was measured every a number of times of reciprocation of 1000. The results are shown in Tables 1 and 2 (the sign "-" in the Tables means no measurement).

**[Table 1]**

| Number of times of friction (times) | Contact angle (degrees) | | | |
|---|---|---|---|---|
| | Example 1 | Example 2 | Example 3 | Comparative Example 1 |
| 0 | 116 | 115 | 116 | 115 |
| 1000 | 110 | 112 | 113 | 102 |
| 2000 | 105 | 110 | 110 | 91 |
| 3000 | 100 | 105 | 106 | 73 |
| 4000 | 98 | 102 | 102 | 65 |
| 5000 | 88 | 95 | 100 | - |

**[Table 2]**

| | Contact angle (degrees) | |
|---|---|---|
| Number of times of friction (times) | Example 4 | Example 5 |
| 0 | 115 | 115 |
| 1000 | 103 | 106 |
| 2000 | 94 | 98 |
| 3000 | 82 | 88 |
| 4000 | 70 | 76 |
| 5000 | 58 | 65 |

It was found as shown in Tables 1 and 2 that a surface-treating layer obtained with each of the surface-treating agents of Examples 1 to 5 exhibited excellent friction durability. It was considered that each of the surface-treating agents of Examples 1 to 5 had a structure with a direct bond of three functional groups having a Si atom (-CH₂CH₂CH₂Si(OCH₃)₃), to a carbon atom, thereby allowing such a surface-treating layer formed to be improved in both friction durability and chemical resistance (durability to artificial sweat).

The e/f ratio of compound (B) in the surface-treating agent of Example 1 was 1.25,and the e/f ratio of compound (D) in the surface-treating agent of Example 2 was 0.68. It was considered that the surface-treating agent of Example 2 was lower in the content of a (CF₂CF₂O) unit included in compound (D) than the content of a (CF₂O) unit included therein and therefore the surface-treating layer formed was easily slid to result in further improving in both friction durability and chemical resistance (durability to artificial sweat)).

It was considered that the molecular weight of the PFPE chain in compound (F) in the surface-treating agent of Example 3 was about 5,300 and was higher than the molecular weights of the respective PFPE chains in compound (B) used in Example 1, compound (D) used in Example 2, and control compound 1 used in Comparative Example 1, resulting in more improvements in abrasion resistance and chemical resistance in the surface-treating layer than a case of use of any of such compounds.

### Industrial Applicability

The present invention can be suitably utilized for forming a surface-treating layer on surfaces of various base materials, in particular, on a surface of an optical member required to have wear durability.

## Claims

1. A perfluoro(poly)ether group-containing silane compound represented by formula (1a) or formula (1b):
(Rf-PFPE)_{β}-X-(CR^{a}ₖR^{b}ₗR^{c}ₘ)_{α} ... (1a)
(R^{c}ₘR^{b}ₗR^{a}ₖC)_{α}-X-PFPE-X-(CR^{a}ₖR^{b}ₗR^{c}ₘ)_{α} ... (1b)
wherein:
Rf represents, each independently at each occurrence, an alkyl group having 1 to 16 carbon atoms, optionally substituted with one or more fluorine atoms;
PFPE represents, each independently at each occurrence, a group represented by formula:
-(OC₆F₁₂)ₐ-(OC₅F₁₀)_{b}-(OC₄F₈)_{c}-(OC₃F₆)_{d}-(OC₂F₄)ₑ-(OCF₂)_{f}-
wherein a, b, c, d, e and f are each independently an integer of 0 or more and 200 or less, the sum of a, b, c, d, e and f is at least 1, and the occurrence order of respective repeating units in parentheses with a symbol a, b, c, d, e or f is not limited in the formula;
X represents, each independently at each occurrence, a single bond or a di- to decavalent organic group;
α is, each independently at each occurrence, an integer of 1 to 9;
β is each independently an integer of 1 to 9;
R^{a} represents, each independently at each occurrence, -Z-CR¹ₚR²_{q}R³ᵣ;
Z represents -R^{e}-Z'-;
R^{e} represents a lower alkylene group;
Z' represents a single bond, an oxygen atom or a divalent organic group;
R¹ represents, each independently at each occurrence, R^{a'};
R^{a'} has the same meaning as R^{a};
the number of C atoms linearly linked via a -Z-group in R^{a} is at most 5;
R² represents, each independently at each occurrence, -R^{d}-Y-SiR⁵ₙR⁶₃₋ₙ;
R^{d} represents, each independently at each occurrence, a lower alkylene group;
Y represents, each independently at each occurrence, a single bond, an oxygen atom or a divalent organic group;
R⁵ represents, each independently at each occurrence, a hydroxyl group or a hydrolyzable group;
R⁶ represents, each independently at each occurrence, a hydrogen atom or a lower alkyl group;
n independently represents an integer of 1 to 3 with respect to every (-R^{d}-Y-SiR⁵ₙR⁶₃₋ₙ) unit;
R³ represents, each independently at each occurrence, a hydrogen atom or a lower alkyl group;
p is, each independently at each occurrence, an integer of 0 to 3;
q is, each independently at each occurrence, an integer of 0 to 3;
r is, each independently at each occurrence, an integer of 0 to 3;
the sum of p, q and r with respect to every (-Z-CR¹ₚR²_{q}R³ᵣ) unit is 3;
R^{b} represents, each independently at each occurrence, -R^{d}-Y-SiR⁵ₙR⁶₃₋ₙ;
R^{c} represents, each independently at each occurrence, a hydrogen atom or a lower alkyl group;
k is, each independently at each occurrence, an integer of 0 to 3;
1 is, each independently at each occurrence, an integer of 0 to 3;
m is, each independently at each occurrence, an integer of 0 to 3; and
the sum of k, 1 and m with respect to every (CR^{a}ₖR^{b}ₗR^{c}ₘ) is 3;
provided that at least one q is 3 or at least one 1 is 3 in the formulae.

2. The perfluoro(poly)ether group-containing silane compound according to claim 1, wherein X represents, each independently at each occurrence, a single bond, or a di- to decavalent organic group having at least one selected from the group consisting of -C₆H₄-, -CO-, -NR⁴- and - SO₂-, and
R⁴ represents, each independently at each occurrence, a hydrogen atom, a phenyl group, or a C₁₋₆ alkyl group.

3. The perfluoro(poly)ether group-containing silane compound according to claim 1 or 2, wherein X represents, each independently at each occurrence, a single bond, or a di- to decavalent organic group having at least one selected from the group consisting of -C₆H₄-, -CONR⁴-, - CONR⁴-C₆H₄-, -C₆H₄-CONR⁴-, -CO-, -CO-C₆H₄-, -C₆H₄-CO-, - SO₂NR⁴-, -SO₂NR⁴-C₆H₄-, -C₆H₄-SO₂NR⁴-, -SO₂-, -SO₂-C₆H₄-, and -C₆H₄-SO₂-, and
R⁴ represents, each independently at each occurrence, a hydrogen atom, a phenyl group, or a C₁₋₆ alkyl group.

4. The perfluoro(poly)ether group-containing silane compound according to any one of claims 1 to 3, wherein X represents, each independently at each occurrence, a single bond, an alkylene group having 1 to 6 carbon atoms, -R⁵¹-C₆H₄-R⁵²-, -R⁵¹-CONR⁴-R⁵²-, -R⁵¹-CONR⁴-C₆H₄-R⁵²-, - R⁵¹-C₆H₄-CONR⁴-R⁵²-, -R⁵¹-CO-R⁵²-, -R⁵¹-CO-C₆H₄-R⁵²-, -R⁵¹-C₆H₄-CO-R⁵²-, -R⁵¹-SO₂NR⁴-R⁵²-, -R⁵¹-SO₂NR⁴-C₆H₄-R⁵²-, -R⁵¹-C₆H₄-SO₂NR⁴-R⁵²-, -R⁵¹-SO₂-R⁵²-, -R⁵¹-SO₂-C₆H₄-R⁵²-, or -R⁵¹-C₆H₄-SO₂-R⁵²-,
R⁵¹ and R⁵² each independently represent a single bond, or an alkylene group having 1 to 6 carbon atoms, and
R⁴ represents, each independently at each occurrence, a hydrogen atom, a phenyl group, or a C₁₋₆ alkyl group.

5. The perfluoro(poly)ether group-containing silane compound according to any one of claims 1 to 4, wherein X each independently represents a single bond or a divalent organic group, and α and β are each 1.

6. The perfluoro(poly)ether group-containing silane compound according to any one of claims 1 to 5, wherein 1 is 3.

7. The perfluoro(poly)ether group-containing silane compound according to any one of claims 1 to 6, wherein q is 3.

8. The perfluoro(poly)ether group-containing silane compound according to any one of claims 1 to 7, wherein Y represents, each independently at each occurrence, a C₁₋₆ alkylene group, -(CH₂)_{g'}-O-(CH₂)_{h'}- wherein g' is an integer of 0 to 6, and h' is an integer of 0 to 6, or - phenylene-(CH₂)_{i'}- wherein i' is an integer of 0 to 6.

9. The perfluoro(poly)ether group-containing silane compound according to any one of claims 1 to 8, wherein Z' represents, each independently at each occurrence, a C₁₋₆ alkylene group, -(CH₂)ⱼ-O-(CH₂)ₕ- wherein j is an integer of 0 to 6, and h is an integer of 0 to 6, or - phenylene-(CH₂)ᵢ- wherein i is an integer of 0 to 6.

10. The perfluoro(poly)ether group-containing silane compound according to any one of claims 1 to 9, wherein Y represents, each independently at each occurrence, a C₁₋₆ alkylene group, and Z' represents, each independently at each occurrence, a C₁₋₆ alkylene group.

11. The perfluoro(poly)ether group-containing silane compound according to any one of claims 1 to 10, wherein -R^{d}-Y- represents, each independently at each occurrence, a C₁₋₃ alkylene group.

12. The perfluoro(poly)ether group-containing silane compound according to any one of claims 1 to 11, wherein Rf is a perfluoroalkyl group having 1 to 16 carbon atoms.

13. The perfluoro(poly)ether group-containing silane compound according to any one of claims 1 to 12, wherein PFPE represents, independently at each occurrence, the following formula (a), (b) or (c):
-(OC₃F₆)_{d}- (a)
wherein d is an integer of 1 to 200,
-(OC₄F₈)_{c}-(OC₃F₆)_{d}-(OC₂F₄)ₑ-(OCF₂)_{f}- (b)
wherein c and d are each independently an integer of 0 or more and 30 or less;
e and f are each independently an integer of 1 or more and 200 or less;
the sum of c, d, e and f is an integer of 10 or more and 200 or less; and
the occurrence order of respective repeating units in parentheses with a suffix c, d, e or f is not limited in the formula;
-(R⁶-R⁷)_{g}- (c)
wherein R⁶ is OCF₂ or OC₂F₄;
R⁷ is a group selected from OC₂F₄, OC₃F₆, OC₄F₈, OC₅F₁₀ and OC₆F₁₂, or a combination of two or three groups independently selected from these groups; and
g is an integer of 2 to 100.

14. The perfluoro(poly)ether group-containing silane compound according to any one of claims 1 to 13, wherein PFPE is, independently at each occurrence, the following formula (a):
-(OC₃F₆)_{d}- (a)
wherein d is an integer of 1 to 200.

15. The perfluoro(poly)ether group-containing silane compound according to any one of claims 1 to 14, wherein an e/f ratio is 0.2 or more and 0.85 or less.

16. The perfluoro(poly)ether group-containing silane compound according to any one of claims 1 to 14, wherein PFPE has at least one branched structure.

17. The perfluoro(poly)ether group-containing silane compound according to any one of claims 1 to 16, wherein a number average molecular weight of an Rf-PFPE moiety is 500 to 30,000.

18. The perfluoro(poly)ether group-containing silane compound according to any one of claims 1 to 17, having a number average molecular weight of 1,000 to 32,000.

19. A surface-treating agent comprising at least one perfluoro(poly)ether group-containing silane compound represented by formula (1a) and/or formula (1b) according to any one of claims 1 to 18.

20. The surface-treating agent according to claim 19, further comprising one or more other components selected from a fluorine-containing oil, a silicone oil, a catalyst, an alcohol, a transition metal, a halide ion, and a compound containing an atom having an unshared electron pair in a molecular structure.

21. The surface-treating agent according to claim 20, wherein the fluorine-containing oil is one or more compound represented by formula (3):
R²¹-(OC₄F₈)_{a'}-(OC₃F₆)_{b'}-(OC₂F₄)_{c'}-(OCF₂)_{d'}-R²² ... (3)
wherein:
R²¹ represents an alkyl group having 1 to 16 carbon atoms, optionally substituted with one or more fluorine atoms;
R²² represents an alkyl group having 1 to 16 carbon atoms, optionally substituted with one or more fluorine atoms, a fluorine atom, or a hydrogen atom; and
a', b', c' and d' represent four types of the numbers of repeating units of perfluoro(poly)ether forming a main backbone of a polymer, respectively, and are, independently of each other, an integer of 0 or more and 300 or less, the sum of a', b', c' and d' is at least 1, and the occurrence order of respective repeating units in parentheses with a suffix a', b', c' or d' is not limited in the formula.

22. The surface-treating agent according to claim 20 or 21, wherein the fluorine-containing oil is one or more compound represented by formula (3a) or (3b):
R²¹-(OCF₂CF₂CF₂)_{b"}-R²² ... (3a)
R²¹-(OCF₂CF₂CF₂CF₂)_{a"}-(OCF₂CF₂CF₂)_{b"}-(OCF₂CF₂)_{c"}(OCF₂)_{d"}-R²² ... (3b)
wherein:
R²¹ represents an alkyl group having 1 to 16 carbon atoms, optionally substituted with one or more fluorine atoms;
R²² represents an alkyl group having 1 to 16 carbon atoms, optionally substituted with one or more fluorine atoms, a fluorine atom, or a hydrogen atom;
b" is an integer of 1 or more and 100 or less in the formula (3a);
a'' and b" are each independently an integer of 0 or more and 30 or less, and c" and d'' are each independently an integer of 1 or more and 300 or less, in the formula (3b); and
the occurrence order of respective repeating units in parentheses with a suffix a", b", c" or d" is not limited in the formulae.

23. The surface-treating agent according to claim 22, at least comprising one or more compound represented by the formula (3b).

24. The surface-treating agent according to claim 22 or 23, wherein a mass ratio of at least one perfluoro(poly)ether group-containing silane compound represented by the formula (1a) or formula (1b) according to any one of claims 1 to 15 and the compound represented by the formula (3b) is 10:1 to 1:10.

25. The surface-treating agent according to any one of claims 22 to 24, wherein the compound represented by the formula (3a) has a number average molecular weight of 2,000 to 8,000.

26. The surface-treating agent according to any one of claims 22 to 25, wherein the compound represented by the formula (3b) has a number average molecular weight of 2,000 to 30,000.

27. The surface-treating agent according to any one of claims 22 to 25, wherein the compound represented by the formula (3b) has a number average molecular weight of 8,000 to 30,000.

28. The surface-treating agent according to any one of claims 19 to 27, further comprising a solvent.

29. The surface-treating agent according to any one of claims 19 to 28, which is used as an antifouling coating agent or a water-proof coating agent.

30. The surface-treating agent according to any one of claims 19 to 29, for use in vacuum deposition.

31. A pellet comprising the surface-treating agent according to any one of claims 19 to 30.

32. An article comprising a base material, and a layer formed from the compound according to any one of claims 1 to 18 or the surface-treating agent according to any one of claims 19 to 31, on the surface of the base material.

33. The article according to claim 32, wherein the article is an optical member.

34. The article according to claim 32, wherein the article is a display.
